(19) Europäisches Patentamt
European Patent Office
Office européen des brevets

(11) Veröffentlichungsnummer: **0 247 506**
**A2**

(12) **EUROPÄISCHE PATENTANMELDUNG**

(21) Anmeldenummer: **87107309.4**

(22) Anmeldetag: **20.05.87**

(51) Int. Cl.4: **C 08 G 18/42**

(30) Priorität: **26.05.86 DE 3617705**

(43) Veröffentlichungstag der Anmeldung: **02.12.87 Patentblatt 87/49**

(84) Benannte Vertragsstaaten: **AT BE DE ES FR GB IT NL SE**

(71) Anmelder: **HOECHST AKTIENGESELLSCHAFT, Postfach 80 03 20, D-6230 Frankfurt am Main 80 (DE)**

(72) Erfinder: **Engel, Dieter, Dr., Rüsselsheimer Strasse 33, D-6092 Kelsterbach (DE)**
Erfinder: **Just, Christoph, Dr., Akazienweg 8, D-6272 Niedernhausen/Taunus (DE)**
Erfinder: **Brindöpke, Gerhard, Dr., Loreleistrasse 18, D-6230 Frankfurt am Main 80 (DE)**
Erfinder: **Walz, Gerd, Dr., Pfingstbornstrasse 99, D-6200 Wiesbaden (DE)**

(54) **Urethangruppenhaltige Polymere, Verfahren zu ihrer Herstellung und ihre Verwendung.**

(57) Urethangruppenhaltige Polymere, welche durch Fremdvernetzer vernetzungsfähig sind, deren Lösungen sowie deren wässrige Dispersionen, hergestellt ohne den Einsatz von Isocyanaten durch Umsetzung von Polyaminoverbindungen mit Polycarbonaten und gegebenenfalls weitere Umsetzung des Reaktionsproduktes mit Polycarbonsäuren zu Produkten mit einer Säurezahl zwischen 0 und 100 sowie gegebenenfalls teilweise oder vollständige Neutralisation der erhaltenen Produkte durch Zusatz basischer Verbindungen, vorzugsweise organischer Basen, und gegebenenfalls intensiver Vermischung der teilweise oder vollständig neutralisierten Produkte mit einer solchen Menge Wasser, dass wässrige Polymerdispersionen mit einem Feststoffgehalt bis zu 75 Gew.-%, bezogen auf die Dispersion, erhalten werden.

Verwendung der urethangruppenhaltigen Polymeren alleine oder in Abmischung mit weiteren reaktiven Komponenten als Fremdvernetzer aus der Gruppe Isocyanat-, Melamin-, Alkyd- und Epoxiharze in nicht wässrigen oder wässrigen Klebstoff- und Lackformulierungen, insbesondere in wässrigen Einbrennlackformulierungen bzw. in wässrigen, anaphoretisch abscheidbaren härtbaren Lackformulierungen.

EP 0 247 506 A2

Urethangruppenhaltige Polymere, Verfahren zu ihrer Herstellung und ihre Verwendung

Die Erfindung betrifft urethangruppenhaltige Polymere, deren Lösungen sowie deren wäßrige Dispersionen, Verfahren zu ihrer Herstellung und ihre Verwendung als Bindemittelkomponente in nichtwäßrigen oder wäßrigen Klebstoff- und Lacksystemen, insbesondere in wäßrigen härtbaren Lacksystemen.

Für zahlreiche lacktechnische Anwendungen, insbesondere bei der Herstellung von Mehrschichtlackierungen auf metallischen Untergründen, ist der Einbau von stoß- bzw. schlagabsorbierenden Schutzschichten von Bedeutung. So sind z.B. lackierte Flächen von Kraftfahrzeugkarosserien besonderen Einflüssen, wie beispielsweise Steinschlag durch aufgewirbeltes Streugut, vor allem Steinsplitt, ausgesetzt. Bei einer derartigen Schlageinwirkung können z.B. Steinschlagschutzschichten und/oder sogenannte Füllerschichten, die zwischen der üblichen Grundierung und der Decklackierung angeordnet sind, den entscheidenden Teil der Energiedissipation übernehmen. Daneben sollen Füllerschichten, z.B. bei Automobilserienlackierungen, durch Ausgleichen der Unebenheiten des Untergrundes die Herstellung glatter Oberflächen ermöglichen. Dazu müssen Füller einerseits relativ harte Filme liefern, um die Naßschleifbarkeit der Lackierung zu ermöglichen ohne daß sich dabei das Schleifpapier zusetzt, andererseits sollen sie, auch bei tiefen Temperaturen, ausreichende Elastizität besitzen, um einen wirksamen Steinschlagschutz zu gewährleisten.

Füller des Standes der Technik enthalten z.B. als Bindemittel Alkyd(polyester)harze, Aminharze und ggf. Epoxyharze. Solche Bindemittel liefern zwar harte, aber nicht

ausreichend elastische Lackfilme, so daß ihnen nur eine beschränkte steinschlagschützende Wirkung zukommt.

Aufgrund der sich ständig verschärfenden Umweltschutzbestimmungen besteht bei den Anwendern von Füllern auch ein verstärktes Interesse an lösungsmittelfreien bzw. lösungsmittelarmen wäßrigen Füllersystemen, sogenannten Hydrofüllern.

Der Erfindung liegt somit die Aufgabe zugrunde, polymere Bindemittel bzw. deren stabile wäßrige Dispersionen herzustellen, die insbesondere in Lacksystemen als elastifizierende Bindemittelkomponente fungieren können, beispielsweise in sogenannten Hydrofüller-Formulierungen, bei denen der resultierende Lack nach dem üblichen Einbrennen, z.B. bei 100 bis 180°C, ausreichende Elastizitäten aufweisen muß, d.h. insbesondere ausgezeichnete Schlagtiefungswerte bzw. Erichsentiefungen zeigt, und die auch in Klebstoffsystemen vorteilhaft verwendet werden können.

Es wurde nun überraschenderweise gefunden, daß diese Aufgabenstellung unter Einsatz von Bindemitteln bzw. Bindemitteldispersionen, die vernetzungsfähige urethangruppenhaltige Polymere enthalten, erfüllt werden kann, wobei die vernetzungsfähigen urethangruppenhaltigen Polymeren ohne den Einsatz von Isocyanaten durch Umsetzung von Biscarbonaten mit Diaminen hergestellt werden können.

Die Umsetzung von Biscarbonatstrukturen mit Diaminen ist grundsätzlich aus der Literatur bekannt.

Es sind bereits verschiedene Verfahren zur Herstellung von urethangruppenhaltigen Polymerdispersionen bekannt (vgl. z.B. D. Dieterich, Angew. Makromol. Chem. 98 (1981) 133 - 165). Ihnen gemeinsam ist der Einsatz von Diisocyanaten. Letztere sind relativ teure Komponenten, welche den Preis

für das Endprodukt stark erhöhen. Für verschiedene Anwendungsgebiete auf dem Lacksektor ist das resultierende hohe Preisniveau nicht tragbar, so z.B. für den Einsatz in relativ preisgünstigen Zwischenschichtlackierungen, insbesondere in sogenannten Füllern.

Füller dienen bekanntlich dem Zweck, Lackierungen aufzufüttern, um optisch dick erscheinende Lackschichten mit runden Kanten, insbesondere an Automobilen, zu erzeugen. Andererseits bilden sie einen gewissen Schutz gegen Steinschlag und Steinsplitteinwirkungen. Die nach den obengenannten bekannten Verfahren hergestellten Polyurethan-(PUR)-Dispersionen besitzen im allgemeinen aber außer den für die Dispergierung erforderlichen Carboxylgruppen keine weiteren funktionellen Gruppierungen, welche z.B. für zusätzliche Vernetzungsreaktionen beansprucht werden könnten, so daß die aus ihnen hergestellten Beschichtungen bzw. Lackierungen nicht ausreichend lösungsmittel- bzw. wasserbeständig sind, was von entscheidendem Nachteil sein kann.

Aus der sowjetischen Patentveröffentlichung SU 413824-A ist die Verwendung von Polyaminourethanen zur Herstellung von Formkörpern mit verbesserter Elastizität durch Umsetzung mit Epoxidharzen bekannt. Die verwendeten Polyaminourethane werden durch Umsetzung von Biscarbonaten mit Diaminen hergestellt. Durch Aushärten des Epoxidharz-Polyaminourethan-Gemisches in geeigneten Formteilen werden als Endprodukte elastische Formkörper erhalten.

Aus den japanischen Patentveröffentlichungen Sho 57 (= 1982) - 202317 und Sho 57 (= 1982) - 202318 sind reaktive Harzgemische aus Biscarbonat- und Polyaminokomponenten bekannt. Die bei der Umsetzung dieser Gemische resultierenden Urethanstrukturen werden aber erst nach der Applikation der Harzkomposition auf das Substrat gebildet.

Gegenstand der vorliegenden Erfindung sind urethangruppenhaltige Polymere der allgemeinen Formel (I) bzw. deren wäßrige Dispersionen,

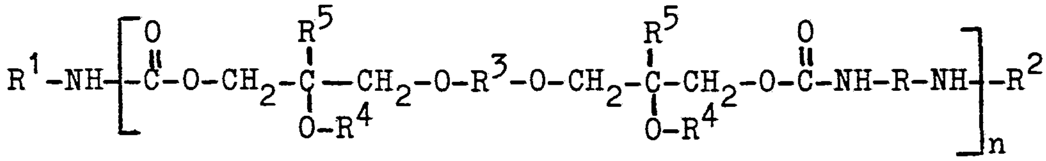 (I)

worin R, $R^1$, $R^2$, $R^3$, $R^4$, $R^5$ und n folgende Bedeutung haben:

n = eine Zahl von 1 - 500, vorzugsweise 2 - 100, insbesondere 5 - 50,

$R^5$ = H und/oder $CH_3$,

R = Alkylen mit 1 - 25, vorzugsweise 3 - 15, insbesondere 5 - 10 C-Atomen, das linear, verzweigt, cyclisch, gesättigt, ungesättigt sein sowie auch Heteroatome, vorzugsweise Sauerstoff und/oder Stickstoff, ferner Hydroxyl-, Amino- oder Carboxylgruppen enthalten kann, oder eine bivalente Gruppe der Formeln (II), (III) oder (IV),

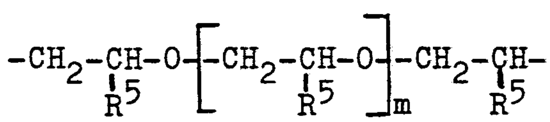 (II)

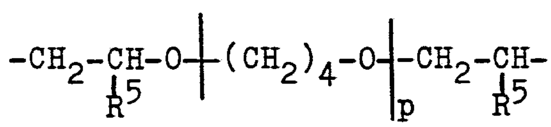 (III)

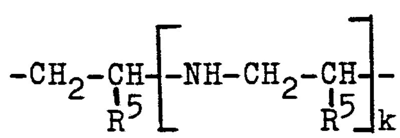 (IV)

mit m und p = eine Zahl von 0 - 1000, vorzugsweise 1 - 50, insbesondere 3 - 30, k = eine Zahl von 0 - 20, vorzugsweise 1 - 5, oder Mischungen aus den Gruppen der Formeln (II), (III) und (IV),

$R^1$ = $H_2N$-R-, oder

Alkyl mit 1 - 25, vorzugsweise 3 - 15, insbesondere 5 - 10 C-Atomen, das linear, verzweigt, cyclisch, gesättigt, ungesättigt sein sowie auch Heteroatome, vorzugsweise Sauerstoff und/oder Stickstoff, ferner Hydroxyl-, Amino- oder Carboxylgruppen enthalten kann, oder

Aryl mit 6 - 14, vorzugsweise 6 - 10 C-Atomen, insbesondere Phenyl oder Naphthyl, das zusätzlich durch $(C_1-C_8)$-Alkylgruppen, $(C_1-C_8)$-Hydroxyalkylgruppen, Hydroxyl-, Amino- oder Carboxylgruppen substituiert sein und auch Heteroatome, vorzugsweise Sauerstoff und/oder Stickstoff enthalten kann, oder

Alkylaryl mit 7 - 25 C-Atomen, das zusätzlich durch Hydroxyl-, Amino- oder Carboxylgruppen substituiert sein und auch Heteroatome, vorzugsweise Sauerstoff und/oder Stickstoff, enthalten kann,

$R^2$ = H oder $R^1$,

oder eine Gruppe der Formel (V),

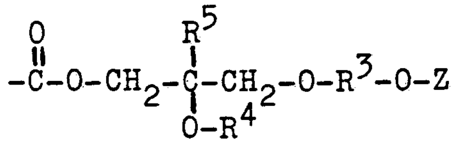 (V)

worin Z eine der Gruppierungen 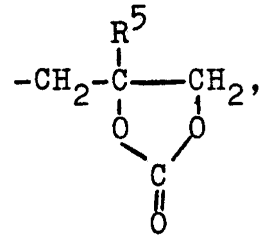,

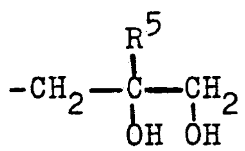 oder 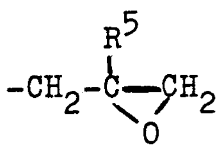 bedeuten kann, oder

$R^2$ und $R^1$ gemeinsam ein Ringschlußglied unter Cyclisierung der Verbindung der Formel (I) darstellen,

$R^3$ = a) Alkylen mit 1 - 25, vorzugsweise bis zu 15, insbesondere bis zu 6 C-Atomen, das linear, verzweigt, cyclisch, gesättigt oder ungesättigt sein kann, oder

eine bivalente Gruppe der Formel (VI),

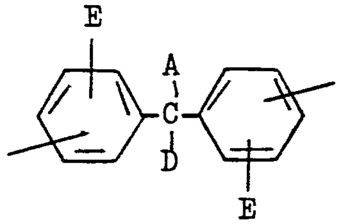

(VI)

worin A und D = H oder ($C_1$-$C_3$)-Alkyl, vorzugsweise H oder Methyl, und E = H oder ($C_1$-$C_8$)-Alkyl oder Halogen, insbesondere Chlor oder Brom, bedeuten und die Benzolringe in Formel (VI) auch teilweise oder vollständig hydriert sein können, oder einen gegebenenfalls durch niedere Alkylgruppen und/oder Halogen substituierten bivalenten Bisphenylenrest, dessen Benzolringe auch teilweise oder vollständig hydriert sein können, oder eine bivalente Gruppe der Formel (VII),

$$-CH_2-\underset{G}{\underset{|}{CH}}-\left[O-CH_2-\underset{G}{\underset{|}{CH}}\right]_q- \qquad \text{(VII)}$$

worin q = eine Zahl von 1 - 200, vorzugsweise 2 - 50, insbesondere 2 - 25, und G = H und/oder ($C_1$-$C_3$)-Alkyl, vorzugsweise H und/oder Methyl, bedeuten, oder eine bivalente Polytetrahydrofurangruppe der Formel (VIII),

$$-CH_2-CH_2-CH_2-CH_2-O-\left[CH_2-CH_2-CH_2-CH_2-O\right]_r- \qquad \text{(VIII)}$$

worin r = eine Zahl von 1 - 200, vorzugsweise 1 - 50, insbesondere 2 - 25, bedeutet, oder

b) eine bivalente Gruppe der Formel (IX),

$$-M-O-CH_2-\overset{R^5}{\underset{OH}{\overset{|}{\underset{|}{C}}}}-CH_2-O-\overset{O}{\overset{\|}{C}}-Y-\overset{O}{\overset{\|}{C}}-O-CH_2-\overset{R^5}{\underset{OH}{\overset{|}{\underset{|}{C}}}}-CH_2-O-M- \qquad \text{(IX)}$$

worin M für [$R^3$ a)] steht und

Y = eine bivalente Gruppe der Formeln (II), (III), (IV) oder einen bivalenten aliphatischen Rest mit 1 - 8 C-Atomen, vorzugsweise Alkylen oder Alkenylen, der durch OH-Gruppen und/oder HOOC-Gruppen substituiert sein kann, oder einen bivalenten cycloaliphatischen Rest mit 6 - 25 C-Atomen, vorzugsweise cyclisiertes Alkylen oder Alkenylen, der durch Hydroxyl- und/oder Carboxylgruppen substituiert sein kann, oder einen bivalenten, vorzugsweise einen linearen α,ω-bivalenten, Polyesterrest vom durchschnittlichen Molekulargewicht 500 - 100000, vorzugsweise 1000 - 20000, insbesondere 1500 - 10000, der aus gegebenenfalls substituierten aromatischen und/oder aliphatischen und/oder cycloaliphatischen Di- oder Tricarbonsäureeinheiten sowie aliphatischen ($C_2$-$C_8$)-Dioleinheiten oder aliphatischen Dihydroxypolyethereinheiten mit bis zu 200 linearen, verzweigten oder cyclischen ($C_2$-$C_8$)-Monomereinheiten in der Polyethergruppe aufgebaut ist, oder eine bivalente Gruppe der Formel (X),

$$--R^6-\overset{O}{\overset{\|}{C}}-O-L-O-\overset{O}{\overset{\|}{C}}-R^6-- \qquad (X)$$

in der $R^6$ einen bivalenten Rest aus der Gruppe Phenylen, Tetrahydrophenylen, Hexahydrophenylen, Carbohydroxyphenylen, Vinylen, Methylen, Ethylen, ($C_3$-$C_{10}$)-Alkylen, Naphthylen, Tetrahydronaphthylen, Dekahydronaphthylen, und L einen bivalenten, vorzugsweise einen linearen und/oder verzweigten α,ω-bivalenten, Rest einer Polyestergruppe, einer Poly-($C_2$-$C_4$)alkylenglykolethergruppe, einer Poly($C_1$-$C_8$)-alkylenoxygruppe, einer Polytetrahydrofurangruppe oder einer Polycaprolactongruppe, wobei die genannten Gruppen niedermolekular bis hochmolekular sein und Durchschnittspolymerisationsgrade von 1 bis 200 besitzen können, bedeutet, und

$R^4$ = H oder $-\overset{O}{\overset{\|}{C}}-R^7(COOR^8)_t$, wobei t = eine Zahl von 1 - 3 und $R^7$ einen bivalenten oder polyvalenten linearen oder verzweigten oder cyclischen aliphatischen Rest mit 1 - 8 C-Atomen, oder einen bivalenten oder polyvalenten aromatischen oder aromatischaliphatischen Rest mit 6 - 14, vorzugsweise 6 - 10, insbesondere 6 C-Atomen, oder wenn t = null die Gruppe $-COOR^8$, und $R^8$ Wasserstoff oder den kationischen Rest einer vorzugsweise organischen oder einer anorganischen basischen Verbindung bedeutet, mit der Maßgabe, daß $R^4$ zu wenigstens 5 mol-%, vorzugsweise wenigstens 10 mol-%, insbesondere wenigstens 20 mol-%, bezogen auf $R^4$, für H steht.

Gegenstand der Erfindung ist weiterhin ein Verfahren zur Herstellung von Verbindungen der Formel (I), deren Lösungen bzw. deren wäßrigen Dispersionen, dadurch gekennzeichnet, daß man

A) Polyaminoverbindungen der allgemeinen Formel (Ia),

$$H_2N-R-NH_2 \qquad \text{(Ia)}$$

worin R die Bedeutung wie in Formel (I) hat, gegebenenfalls in Mischung mit Monoaminen der Formeln (IIa) und/oder (IIIa),

$$R^1-NH_2 \qquad \text{(IIa)}$$

$$R^2-NH_2 \qquad \text{(IIIa)}$$

worin $R^1$ und $R^2$ die Bedeutung wie in Formel (I) mit Ausnahme von $H_2N-R-$ und H haben, mit

B) Polycarbonaten der allgemeinen Formel (IVa),

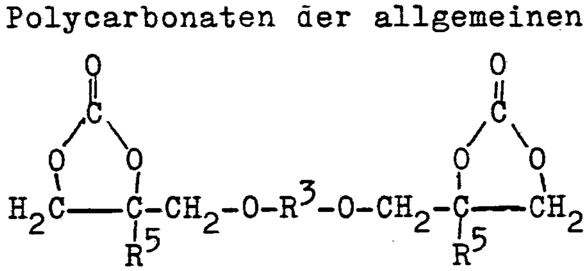

(IVa)

worin $R^3$ und $R^5$ die Bedeutungen wie in Formel (I) haben, umsetzt, wobei die Umsetzung gegebenenfalls bei höheren Temperaturen und/oder gegebenenfalls unter Zusatz von inerten organischen Lösungsmitteln durchgeführt wird, und gegebenenfalls

C) das Umsetzungsprodukt weiter mit Polycarbonsäuren der allgemeinen Formel (Va),

$$H\text{-}R^4 \qquad (Va)$$

worin $R^4$ die Bedeutung wie in Formel (I) mit Ausnahme von H hat, oder mit deren Anhydriden, gegebenenfalls bei höheren Temperaturen, zu einem Produkt mit einer Säurezahl zwischen 0 und 100 umsetzt, das Umsetzungsprodukt gegebenenfalls isoliert oder gegebenenfalls in einem Lösungsmittel löst und/oder gegebenenfalls

D) das Umsetzungsprodukt durch Zusatz einer basischen Verbindung, vorzugsweise einer organischen Base, teilweise oder vollständig neutralisiert und es, gegebenenfalls einschließlich des Lösungsmittels, gegebenenfalls

E) mit einer solchen Menge Wasser intensiv vermischt, daß eine wäßrige Dispersion erhalten wird, die einen Feststoffgehalt von bis zu 75 Gew.-%, vorzugsweise 0,1 bis 75 Gew.-%, insbesondere 5 bis 65 Gew.-%, besonders bevorzugt 20 bis 55 Gew.-%, bezogen auf die Dispersion, besitzt.

Die Umsetzungen in den Verfahrensstufen A) bis C) können bei Normaltemperatur oder bei höheren Temperaturen in üblicher Weise durchgeführt werden. Sie erfolgen bevorzugt im Temperaturbereich von 20 - 200°C, insbesondere 50 - 150°C, besonders bevorzugt 80 - 120°C.

In den Verfahrensstufen A) bis C) können die Reaktanten in Substanz oder aber unter Zusatz von inerten Lösungsmitteln zur Umsetzung gebracht werden.

Es ist dabei unerheblich, ob die Polyaminokomponente A) vorgelegt und die Polycarbonatkomponente B) zudosiert wird, oder ob diese Reaktanten in umgekehrter Reihenfolge dem Reaktionsgefäß zugeführt werden. Vorzugsweise wird die Komponente B) vorgelegt und die Komponente A) zudosiert.

Die Komponenten A) und B) werden im allgemeinen im Molverhältnis von etwa 2 : 1 bis 1 : 2, vorzugsweise 1,5 : 1 bis 1 : 1,5, besonders bevorzugt 1,1 : 1 bis 1 : 1,1, eingesetzt. Durch unvollständige Umsetzung der Reaktanten A), B) und gegebenenfalls C) können bei dem erfindungsgemäßen Verfahrensablauf auch Umsetzungsprodukte entstehen, deren Endgruppen von denen der Verbindungen der Formel (I) verschieden sein können. Solche Nebenprodukte können sich in unterschiedlichen Mengen bilden, die im allgemeinen in dem erfindungsgemäßen Umsetzungsprodukt verbleiben können, da die weitere erfindungsgemäße Verwendung des letzteren durch diese Nebenprodukte und deren Eigenschaftsspektrum im allgemeinen nicht beeinträchtigt wird.

Darüber hinaus resultiert bei dem erfindungsgemäßen Verfahren stets ein statistisches Gemisch aus Makromolekülen der Formel (I) mit unterschiedlicher Molekülgröße, dessen Molekulargewichtsverteilung durch den Geltungsbereich von n als Mittelwert in Formel (I) berücksichtigt ist.

Die gegebenenfalls einzusetzende Lösungsmittelmenge wird möglichst gering bemessen und dient dem Zweck, die Viskosität der Reaktionsschmelze bzw. der resultierenden Harzschmelze so niedrig zu halten, daß diese noch gut rührbar bleibt.

Gegenstand der Erfindung sind ferner auch Harzkompositionen, die urethangruppenhaltige Polymere der Formel (I) enthalten, vorzugsweise in größerer Menge und insbesondere als hauptsächliche Harzkomponente enthalten.

Als inerte organische Lösungsmittel sind solche bevorzugt, deren Siedepunkt oberhalb von 90°C liegt. Auch Lösungsmittelgemische können eingesetzt werden. Die Lösungsmittelauswahl ist nicht kritisch. Besonders bevorzugt sind jedoch solche Lösungsmittel bzw. Lösungsmittelgemische, die mit Wasser mischbar sind, wie z.B. N-Methylpyrrolidon (NMP) und Dimethyldiglykol (DGDME). Sie werden bevorzugt in Mengen von 0 - 100 Gew.-%, insbesondere 0 - 50 Gew.-%, besonders bevorzugt 0 - 20 Gew.-%, bezogen auf das Harzgemisch, dem letzteren insgesamt oder portionsweise zugesetzt. Bei der Herstellung der wäßrigen Dispersionen der Verbindungen der Formel (I) verbleibt dieser Lösungsmittelanteil im allgemeinen in der Dispersion, so daß er von vornherein möglichst niedrig gehalten werden sollte.

Als Ausgangskomponenten A), B), C), D), E) werden bei dem erfindungsgemäßen Verfahren bevorzugt die nachstehend beschriebenen Verbindungen eingesetzt:

A. Polyaminoverbindungen der allgemeinen Formel (Ia),

$$H_2N-R-NH_2 \qquad (Ia)$$

wie vorzugsweise

a) Diamine, bei denen R in Formel (Ia) = Alkylen mit 1 - 25, insbesondere 3 - 15, besonders bevorzugt 5 - 10 C-Atomen, das linear, verzweigt, cyclisch, gesättigt oder ungesättigt sein kann, bedeutet, oder

b) Diamine, bei denen R in Formel (Ia) die Bedeutung von Formel (II) oder (III) hat, d.h. Diamine von Polyethern der Formeln (Ib) oder (Ic),

$$H_2N-CH_2-\underset{R^5}{CH}-O-\left[CH_2-\underset{R^5}{CH}-O\right]_m-CH_2-\underset{R^5}{CH}-NH_2 \qquad (Ib)$$

$$H_2N-CH_2-\underset{R^5}{CH}-O-\left[(CH_2)_4-O\right]_p-CH_2-\underset{R^5}{CH}-NH_2 \qquad (Ic)$$

mit $R^5$ = H, $CH_3$ und m, p = 0 - 10000, insbesondere 1 - 50, besonders bevorzugt 3 - 30, oder

c) Polyaminoverbindungen, worin R in Formel (Ia) die Bedeutung von Formel (IV) hat, d.h. Polyaminoverbindungen der Formel (Id),

$$H_2N-CH_2-\underset{R^5}{CH}-\left[NH-CH_2-\underset{R^5}{CH}\right]_k-NH_2 \qquad (Id)$$

mit $R^5$ = H, $CH_3$ und k = 0 - 20, insbesondere 1 - 5, oder

d) Polyaminoverbindungen wie vorstehend unter a) bis c) aufgeführt in Mischungen untereinander oder in Mischungen mit Monoaminen der Formeln (IIa) und/oder (IIIa), wie Alkylaminoverbindungen, Alkylarylaminoverbindungen, insbesondere Aminohydroxyverbindungen.

B. Polycarbonate der allgemeinen Formel (IVa),

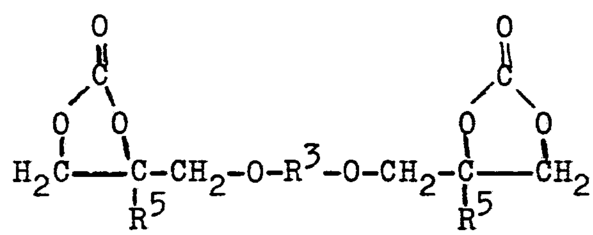

(IVa)

wie Polycarbonate von Polyepoxiden, insbesondere von Bisepoxiden, wie z.B. Diglycidylethern, Diglycidylhydantoinen, Diglycidylestern, Diglycidylurethanen, Diglycidylamiden, vorzugsweise Biscarbonate der Formel (IVa), wie

a) Umsetzungsprodukte aus Diglycidylethern von Verbindungen der Formel (IVb),

$$HO-R^3-OH \qquad (IVb)$$

worin $R^3$ die Bedeutung wie in Formel (IVa) hat, oder deren Gemischen, mit $CO_2$, insbesondere von Verbindungen der Formel (IVb) aus der Gruppe ($C_1$-$C_{25}$)Alkandiole, Bisphenole, wie Bisphenol A,

Bisphenol F, Polyether, wie Polypropylenglykol, Polyethylenglykol, copolymere oder blockcopolymere Polyethylenglykol-/Polypropylenglykolether, Polytetrahydrofuran (Poly-THF), oder

b) Polycarbonate der Formel (IVa), wie Umsetzungsprodukte der allgemeinen Formel (IVc),

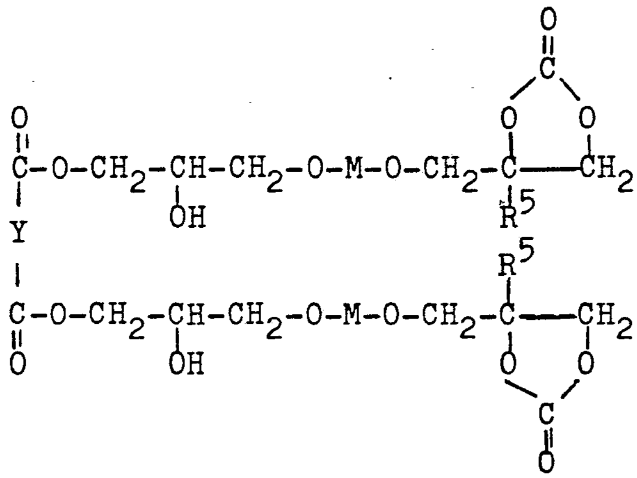

(IVc)

worin $R^5$, M und Y die Bedeutungen wie in Formel (IX) haben, die erhalten werden können durch Umsetzung von Polycarbonsäuren der allgemeinen Formel (IVd),

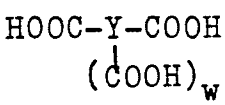

(IVd)

worin w = 0 - 200 bedeutet, insbesondere von Polycarbonsäuren der Formel (IVd) aus der Gruppe aliphatische und/oder aromatische Poly- bzw. Dicarbonsäuren, lineare und/oder verzweigte Oligomere und/oder Polymere mit Carboxylendgruppen, vorzugsweise Umsetzungsprodukte von aliphatischen und/oder aromatischen Dicarbonsäuren bzw. deren Anhydriden mit difunktionellen OH-Verbindungen der Formel (IVb) oder mit OH-funktionellen linearen und/oder verzweigten Polymeren, insbesondere linearen oder verzweigten Polyestern, zu Verbindungen der allgemeinen Formel (IVe),

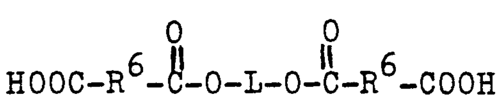

(IVe)

worin L und $R^6$ die Bedeutungen wie in Formel (X) haben, und weitere Umsetzung der Verbindungen der Formel (IVe) mit Carbonat/Epoxyverbindungen, wie sie durch zumindest teilweise Carbonatisierung von Mono- und/oder Polyepoxyverbindungen, vorzugsweise Diepoxyverbindungen, oder durch Mischen von Mono- und/oder Polyepoxyverbindungen mit Mono- und/oder Polycarbonaten erhalten werden können.

Bevorzugt werden die Verbindungen der Formel (IVe) mit solchen Carbonat/Epoxyverbindungen, welche aus Diepoxiden, die durch Carbonatisierung von 30 - 70, vorzugsweise 40 - 60, insbesondere 45 - 55 mol-% der vorhandenen Epoxidgruppen hergestellt worden sind, zu Verbindungen der Formel (IVc) umgesetzt.

Besonders bevorzugt erfolgt die Umsetzung der Verbindungen der Formel (IVe) mit Carbonat/Epoxyverbindungen der allgemeinen Formel (IVf),

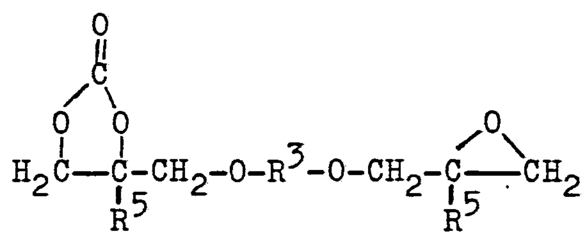

(IVf)

worin $R^3$ die Bedeutung wie in Formel (IVb) und $R^5$ die Bedeutung wie in Formel (I) haben, oder die Verbindungen der Formel (IVe) werden unter Bildung von Verbindungen der Formel (IVc) mit solchen Carbonat/Epoxyverbindungen umgesetzt, wie sie durch teilweise $CO_2$-Abspaltung aus Biscarbonaten der Formel (IVa), welche aus Diolen der Formel (IVb) hergestellt wurden, erhalten werden können, oder es werden die Verbindungen der Formel (IVe) mit solchen Carbonat/Epoxyverbindungen umgesetzt, wie sie durch teilweise Carbonatisierung der Diglycidylether von Diolen der Formel (IVb) erhalten werden können, oder

0 247 506

c) Polycarbonate der Formel (IVa), wie Umsetzungsprodukte, die aus Biscarbonaten durch teilweise Verätherung mit mehrfach OH-funktionellen Verbindungen, vorzugsweise Diolen und OH-funktionellen Polyestern, unter $CO_2$-Abspaltung erhalten werden können.

Als Polyaminoverbindungen der Formel (Ia) kommen beispielsweise infrage:

Diamine, bei denen R in Formel (Ia) einen aliphatischen oder aromatischen $C_1$-$C_{25}$-Kohlenwasserstoffrest darstellt, bevorzugt z.B. Ethylendiamin, 1,2-Propylendiamin, 1,3-Propylendiamin, Tetramethylendiamin, Pentamethylendiamin, Hexamethylendiamin, 2,2',4-Trimethylhexamethylendiamin, Neopentandiamin, Diaminooktan, TCD-Diamin (= 3(4)-Bis-(aminomethyl)-tricyclo-[5,2,$1^{2,6}$]-decan).

Diamine von Polyethern der Formeln (Ib) bzw. (Ic), bevorzugt z.B. solche, bei denen in Formel (Ib) m bzw. p = 0 - 1000, insbesondere 0 - 100, bedeutet.

Polyaminoverbindungen der Formel (Id), bevorzugt z.B. solche, bei denen in Formel (Id) k = 0 - 10, vorzugsweise 0 - 5, insbesondere 0 - 2, bedeutet.

Mischungen aus den vorstehend genannten Polyaminoverbindungen miteinander bzw. mit Monoaminen der Formeln (IIa) bzw. (IIIa), wie z.B. Alkyl-, Aryl-, Alkylarylaminoverbindungen, bevorzugt Aminohydroxyverbindungen.

Als Polycarbonate der Formel (IVa) kommen beispielsweise infrage:

Polycarbonate von Polyepoxiden, bevorzugt von Bisepoxiden, wie z.B. Diglycidylethern, Diglycidylhydantoinen, Diglycidylestern, Diglycidylurethanen, Diglycidylamiden, vorzugsweise Biscarbonate der Formel (IVa). Die erfindungsgemäß einsetzbaren Polycarbonate und das Verfahren zu ihrer Herstellung sind prinzipiell bekannt (vgl. z.B. US-PS 4 407 995, US-PS 4 409 349, PCT (WO)-Patentanmeldung 84/03701 und DE-Patentanmeldungen P 35 29 263.6 und P 36 00 602.5.

Bevorzugte Polycarbonate sind Verbindungen wie z.B. Umsetzungsprodukte aus Diglycidylethern von Polyhydroxyverbindungen der Formel (IVb) mit $CO_2$, wobei die Formel (IVb) vorzugsweise für folgende Verbindungen oder Gemische aus diesen Verbindungen steht:
$(C_1-C_{25})$-Alkandiole, vorzugsweise $(C_2-C_{10})$-Alkandiole, insbesondere $(C_5-C_{10})$-Alkandiole,
Polyether, wie Polyethylenglykol, Polypropylenglykol, Poly-THF, bzw. deren Copolymerisate, vorzugsweise Polypropylenglykol, insbesondere Polypropylenglykol mit einem Molekulargewicht kleiner als 2000,
Bisphenole, vorzugsweise Bisphenol A, Bisphenol F, oder Umsetzungsprodukte entsprechend der Formel (IVc), die beispielsweise bevorzugt erhalten werden können aus Polycarbonsäuren der Formel (IVd), wie z.B. aliphatischen und/oder aromatischen Polycarbonsäuren, vorzugsweise Dicarbonsäuren, wie Oxalsäure, Malonsäure, Bernsteinsäure, Glutarsäure, Adipinsäure, Maleinsäure, Fumarsäure, Itaconsäure, Phthalsäure, Terephthalsäure, Tetrahydrophthalsäure, Naphthalindicarbonsäuren, insbesondere Phthalsäure, Tetrahyrophthalsäure und Hexahydrophthalsäure, oder oligomeren oder polymeren Verbindungen der Formel (IVe), deren Carboxylgruppen in endständiger Position stehen, welche beispielsweise bevorzugt durch Umsetzung von Diolen der Formel (IVb) und/oder OH-funktionellen linearen und/oder verzweigten Polymeren, vorzugsweise linearen oder verzweigten Polyestern, mit aliphatischen und/oder aromatischen Dicarbonsäuren bzw. deren Anhydriden erhalten werden können, vorzugsweise Produkte der Formel (IVe), die durch Umsetzung von OH-funktionellen Polyestern, Polypropylenglykolen, aliphatischen und/oder aromatischen $(C_1-C_{25})$-Diolen mit Carbonsäureanhydriden, wie Phthalsäureanhydrid, Tetrahydrophthalsäureanhydrid, Bernsteinsäureanhydrid, Maleinsäureanhydrid, vorzugsweise Phthalsäureanhydrid und/oder Tetrahydrophthalsäureanhydrid erhalten werden, und Umsetzung dieser Polycarbonsäuren der Formel (IVd) mit Verbindungen, wie z.B. Carbonat/Epoxyverbindungen, die durch zumindest teilweise Carbonatisierung von Mono- und/oder Polyepoxyverbindungen, bevorzugt Diepoxyverbindungen, oder durch Mischen von Mono- und/oder Polyepoxyverbindungen mit Mono- und/oder Polycarbonaten erhalten werden können, vorzugsweise Carbonat/Epoxyverbindungen aus Diepoxiden, die durch Carbonatisierung von 30 - 70, vorzugsweise 40 - 60, insbesondere 45 - 55 mol-% der vorhandenen Epoxidgruppen hergestellt worden sind, insbesondere Monocarbonat/Monoepoxyverbindungen der Formel (IVf), wobei die Diolkomponente des entsprechenden Diglycidylethers eine Verbindung der Formel (IVb) darstellt.

Weitere erfindungsgemäß einsetzbare Vorprodukte sind ferner z.B. Monocarbonat-Monoepoxyverbindungen der Formel (IVf) auf der Basis von Bisphenol A bzw. Bisphenol F sowie von Polypropylenglykoldiglycidylethern, oder Carbonat/Epoxyverbindungen, die durch Umsetzung von Biscarbonaten der Formel (IVa) mit Diglycidylethern von Diolen der Formel (IVb) (vorzugsweise im Molverhältnis Biscarbonat : Diol wie 2 : 1), wobei $CO_2$ abgespalten wird, erhalten werden können. Bevorzugt werden dabei die Biscarbonate von Bisphenol-A- oder -F-diglycidylethern und von Polypropylenglykoldiglycidylethern eingesetzt, besonders bevorzugt ist das Dicarbonat aus Bisphenol-A-diglycidylether, oder Carbonat/Epoxyverbindungen, bestehend aus teilweise carbonatisierten Diglycidylethern von Diolen der Formel (IVb) (vorzugsweise von solchen komplexen Diolen, die aus Polycarbonsäure- und Dioleinheiten im Molverhältnis von 1 : 1 bis 1 : 2 bestehen). Besonders bevorzugt sind hier Umsetzungen von linearen und/oder verzweigten Polyestern mit OH-Zahlen zwischen 20 und 250 mit Diglycidylethern von Diolen der Formel (IVb) und die anschließende Carbonatisierung der Umsetzungsprodukte. Ganz besonders bevorzugt sind Umsetzungen von linearen Polyestern mit OH-Zahlen zwischen 30 und 200 mit Bisphenol-A-diglycidylethern und anschließender Carbonatisierung.

Die Herstellung der vorstehend beschriebenen Verfahrenskomponenten A (= Polyaminoverbindungen der allgemeinen Formel (Ia)) und B (= Polycarbonate der allgemeinen Formel (IVa)) für die erfindungsgemäßen Verfahrensstufen A) und B) kann in Lösung oder ggf. in der Schmelze erfolgen. Bevorzugte Lösungsmittel sind inerte Lösungsmittel mit Siedepunkten oberhalb von 90°C, vorzugsweise aus der Gruppe Ketone, Glykolether, Ester, Pyrrolidone bzw. Mischungen daraus, insbesondere Glykolether und Pyrrolidone bzw. deren Gemische.

Bei der erfindungsgemäßen Umsetzung der Komponenten A und B reagieren die Dioxolon-(2)-Reste der Carbonatgruppierungen in der Komponente B selektiv mit den primären Aminogruppen in der Komponente A unter Urethangruppenbildung. Die Urethangruppenbildung erfolgt hierbei ohne die Verwendung von teueren monomeren Isocyanatkomponenten. Letzere sind außerdem als Restmonomere im Endprodukt unerwünscht und physiologisch problematisch.

In einer bevorzugten Ausführungsform des erfindungsgemäßen Verfahrens werden die aus den Verfahrenskomponenten A) (= Polyaminoverbindungen der allgemeinen Formel (Ia)) und B) (= Polycarbonate der allgemeinen Formel (IVa)) erhaltenen Umsetzungsprodukte gemäß der Verfahrensstufe C) mit einer solchen Menge einer Polycarbonsäure der Formel (Va) oder deren Anhydrid umgesetzt, daß sich bei dem Umsetzungsprodukt eine Säurezahl von 0 - 100, vorzugsweise 1 - 80, insbesondere 5 - 60 einstellt. Bevorzugt werden die Anhydride von Polycarbonsäuren eingesetzt, vorzugsweise z.B. Bernsteinsäureanhydrid, Maleinsäureanhydrid, Phthalsäureanhydrid, Tetrahydrophthalsäureanhydrid, Trimellithsäureanhydrid.

Ähnlich wie die nach der Verfahrenssstufe B) erhaltenen Bindemittel können auch die nach der erfindungsgemäßen Verfahrensstufe C) herstellten Bindemittel als solche in

üblicher Weise in Klebstoff- oder Lackformulierungen, vorzugsweise in nicht wäßrigen Systemen, eingesetzt werden. Für den Einsatz in wäßrigen Systemen werden vorzugsweise die nach der Verfahrensstufe C) erhaltenen Bindemittel nach den Verfahrensvarianten D) bzw. E) weiter umgesetzt.

In einer ebenfalls bevorzugten Verfahrensvariante wird das nach der Verfahrensstufe C) erhaltene Umsetzungsprodukt in der erfindungsgemäßen Verfahrensstufe D) durch Zusatz von Basen, vorzugsweise von Aminoverbindungen, zumindest teilweise oder auch vollständig neutralisiert, vorzugsweise in der Schmelze, oder auch unter Zugabe von inerten organischen Lösungsmitteln. Besonders bevorzugte Basen sind Aminohyroxyverbindungen, insbesondere aliphatische Aminohydroxyverbindungen, wie z.B. Monoethanolamin, Diethanolamin, Triethanolamin, Monomethylethanolamin, Dimethylethanolamin, Monoisopropanolamin, Triisopropanolamin, 2,2'-Aminoethoxyethanol, Aminoethylethanolamin, Diethylethanolamin, Dipropylethanolamin, Butylethanolamin, Diisopropylethanolamin, Dibutylethanolamin, 3-Aminopropanol, 3-Dimethylaminopropanol, 2-Aminobutanol-1, 2-Amino-2-methyl-propanol.

Die Überführung der nach der Verfahrensstufe D) erhaltenen Bindemittelmischung in eine wäßrige Dispersion kann in einer weiteren Verfahrensvarianten in der erfindungsgemäßen Verfahrensstufe E) wahlweise durch Eintragen des Polymerisats bzw. dessen Lösung in die wäßrige Phase oder durch Zusatz von Wasser in die Polymerisatschmelze oder Polymerisatlösung erfolgen, und zwar bei Temperaturen von vorzugsweise zwischen 25 und 100°C, insbesondere 30 - 80°C. Bevorzugt wird die Polymerisatschmelze für die Dispersionsherstellung eingesetzt.

Gegebenenfalls können zur Unterstützung des Dispergiervorganges bzw. zur Erhöhung der Stabilität der wäßrigen Bindemitteldispersion Emulgatoren und/oder Schutzkolloide zugesetzt werden.

Im Falle der Eintragung des Polymerisates in das Wasser bzw. eine wäßrige Emulgator- und/oder Schutzkolloidlösung muß die u.U. hohe Viskosität der Polymerisatlösung beachtet werden, die den Einsatz entsprechender Dosiergeräte (z.B. einer Zahnradpumpe) erforderlich machen kann. Gegebenenfalls muß die Polymerisatlösung bzw. -schmelze in an sich bekannter Weise durch ein geeignetes inertes Lösungsmittel bzw. Lösungsmittelgemisch verdünnt werden, das nach erfolgter Dispergierung durch Destillation wieder entfernt werden kann.

Im Falle der Dosierung von Wasser bzw. wäßrigen Lösungen von Emulgatoren und/oder Schutzkolloiden zur Polymerisatmischung wird in der Regel ein ausgeprägtes Viskositätsmaximum durchlaufen. Für ausreichend starke Rühraggregate muß daher ggf. Sorge getragen werden.

Die erfindungsgemäß hergestellten wäßrigen Dispersionen besitzen einen Feststoffgehalt von vorzugsweise bis zu 75 Gew.-%, insbesondere 0,1 bis 75, besonders bevorzugt 5 bis 65, vor allem 20 bis 55 Gew.-%.

Erfindungsgemäße Bindemittellösungen können alle üblicherweise denkbaren Feststoffgehalte aufweisen.

Das erfindungsgemäße Bindemittel bzw. dessen entsprechende wäßrige Dispersion aus Verbindungen der Formel (I) wird in einer bevorzugten Ausführungsform, z.B. in Kombination mit weiteren reaktiven Komponenten, wie z.B. blockierten oder nicht blockierten Isocyanaten oder Polyisocyanaten, vorzugsweise reaktiven Harzen, insbesondere Melamin- und/oder Alkyd- und/oder Epoxiharzen, in Klebstoff- oder Lackformulierungen, insbesondere in wäßrigen Einbrennlackformulierungen eingesetzt.

Insbesondere sind die erfindungsgemäßen Bindemittel der Formel (I) bzw. deren wäßrige Dispersionen in Kombination mit den oben erwähnten, vorzugsweise wasserdispergierbaren, reaktiven Harzen sehr gut geeignet zur Herstellung

von sogenannten Füllern bzw. Hydrofüllern. Die Herstellung solcher nicht wäßriger oder wäßriger Lackformulierungen erfolgt unter Zusatz üblicher Zusatzstoffe und Additive in üblicher Weise.

Der entscheidende und überraschende Eigenschaften beinhaltende Vorteil der erfindungsgemäßen Bindemittel der Formel (I) und deren Lösungen bzw. deren Dispersionen bei deren Anwendung in (ggf. wäßrigen) Lacksystemen gegenüber dem Stand der Technik wird dadurch erzielt, daß die erfindungsgemäßen Bindemittel bzw. deren Lösungen und Dispersionen neben Urethangruppierungen in der Polymerkette auch eine relativ große Zahl von freien OH-Gruppen enthalten können, die z.B. für Vernetzungsreaktionen mit entsprechenden reaktiven Harzen, wie Epoxid-, Maleinat-, Melamin- und Acrylatharzen, zur Verfügung stehen. In einer bevorzugten Ausführungsform erfolgt eine derartige Vernetzung durch Abmischung mit Melaminharzen, Applikation der Mischung z.B. als Beschichtung oder Lack und anschließendes Einbrennen.

Gegenstand der Erfindung ist daher weiterhin die Verwendung von Verbindungen der Formel (I) in fester bzw. pulveriger Form, in Lösung oder in wäßriger Dispersion, vorzugsweise in Lösung oder wäßriger Dispersion, insbesondere in wäßriger Dispersion, zur Herstellung von Beschichtungen, Lacken oder Klebstoffen, vorzugsweise von Einbrennbeschichtungen oder von Einbrennlacken, insbesondere von Einbrennlacken in Abmischung mit reaktiven Melaminharzen als Fremdvernetzer.

Gegenstand der Erfindung sind ferner Abmischungen von Verbindungen der Formel (I) mit reaktiven Harzen, wie Epoxid-, Maleinat-, Melamin- und Acrylatharzen, vorzugsweise Melaminharzen, in üblichen Mischungsverhältnissen, in fester Form bzw. Pulverform oder in gelöster Form oder in dispergierter Form, vorzugsweise in wäßrig-dispergierter Form, sowie Verfahren zur Herstellung der Abmischungen durch Vermischen der Komponenten in der jeweils gewünschten Form bzw. in dem gewünschten Mischungsverhältnis.

Weiterer Gegenstand der Erfindung ist die Verwendung der vorstehend genannten Abmischungen zur Herstellung von Einbrennbeschichtungen, Einbrennlacken, Hydroeinbrennbeschichtungen, Hydroeinbrennlacken sowie von Klebstoffen. Besonders bevorzugt ist die Herstellung von Hydrofüllern sowie deren Anwendung auf metallischen und nichtmetallischen Oberflächen, vorzugsweise auf metallischen Oberflächen.

Füller und Hydrofüller, die mit erfindungsgemäßen Bindemitteln bzw. deren wäßrigen Dispersionen isocyanatfrei formuliert werden, können in Kombination mit reaktiven Harzen, wie z.B. Melaminharzen, erfindungsgemäß Einbrennbeschichtungen auf Metallen bilden, die ausgezeichnete Schlagtiefungswerte besitzen, welche z.B. auf Stahlblech im Bereich von 80 - 100 in • lb (gemessen nach ASTM D 2794-69 (Reapproved 1974)) liegen können. Demgegenüber zeigen mit anderen bekannten isocyanatfreien Hydrofüllern des Standes der Technik hergestellte Einbrennbeschichtungen vergleichsweise Schlagtiefungswerte auf Stahlblech von lediglich ca. 10 in • lb. Das Härten der Beschichtungen durch Einbrennen erfolgt dabei in üblicher Weise bei möglichst niedrigen Einbrenntemperaturen. Diese liegen bevorzugt im Bereich von 100 bis 180°C.

Bei der Anwendung erfindungsgemäßer Verbindungen der Formel (I) aus Lösungen mit organischen Lösungsmitteln ist eine Neutralisation der Verbindungen der Formel (I) nicht erforderlich, sie ist aber möglich unter Verwendung beliebiger Basen, vorzugsweise organischer Basen, und kann in manchen Fällen vorteilhaft sein. Dagegen ist bei der Anwendung von Verbindungen der Formel (I) aus wäßriger Dispersion stets eine teilweise oder vollständige Neutralisation der Verbindungen der Formel (I) erforderlich. Diese kann unter Verwendung beliebiger basischer Verbindungen

erfolgen. Bevorzugt sind organische Basen, insbesondere organische Aminohydroxyverbindungen. Bei Anwendung aus wäßriger Dispersion muß die Filmbildung der Verbindungen der Formel (I) nach dem Ablüften bzw. Trocknen der aufgebrachten Dispersionsschicht spätestens beim Einbrennen der Beschichtungsmasse bzw. der Lackschicht erfolgen. Es ist vorteilhaft, wenn diese Filmbildung aber bereits bei niedrigeren Temperaturen im Verlauf des Trocknungsvorganges rasch und störungsfrei erfolgt.

Von maßgebendem Einfluß auf die elastischen Eigenschaften von eingebrannten Lackschichten bzw. Beschichtungsmassen auf der Basis von Verbindungen der Formel (I) kann u.a. der Aufbau des Restes $R^3$ in Formel (I) sein. Lange aliphatische Reste $R^3$ können erfahrungsgemäß z.B. weiche und elastische Polymerisateigenschaften ergeben, und kürzer werdende Reste $R^3$ können zu harten Polymerisaten führen. Besonders harte bis glasharte Produkte können mit aromatischen Resten $R^3$ erhalten werden.

Als ein Maß für die Tieftemperatureigenschaften von Hydrofüllerlacken auf der Basis von Verbindungen der Formel (I), insbesondere für das Steinschlagverhalten auf Kraftfahrzeugkarosserieblechen in der Kälte, könnte z.B. die Glastemperatur $T_G$ des die sogenannte Weichphase in den Molekülen der Formel (I) bildenden Restes $R^3$ herangezogen werden. Je tiefer die Glastemperatur $T_G$ des Restes $R^3$ liegt, desto günstiger sind die Lackeigenschaften bei tiefen Temperaturen. Bevorzugt liegt die $T_G$ von $R^3$ in Verbindungen der Formel (I) für Hydrofüllerlacke unterhalb von 20°C, insbesondere unterhalb von 0°C, besonders bevorzugt unterhalb von -10°C. Anforderungen dieser Art können z.B. u.a. mit Resten $R^3$ auf Polyesterbasis oder Polyetherbasis unschwer erfüllt werden.

Wie der Formel (I) weiterhin entnommen werden kann, stehen in den Verbindungen der Formel (I) die für Fremdvernetzungsreaktionen beim Einbrennvorgang zur Verfügung stehenden OH-Gruppen (d.s. $R^4O$-Gruppen in Formel (I)) in ß-Stellung zum Sauerstoffatom der Urethangruppe, was zu überraschend vorteilhaften Lackeigenschaften führt.

Ebenso wie die erfindungsgemäßen pulverförmigen Lackformulierungen bzw. die Lackformulierungen in Form von Bindemittellösungen in organischen Lösungsmitteln können auch die Hydrofüllerlacke auf Basis erfindungsgemäßer Bindemittel der Fomel (I) in wäßriger Dispersionsform durch elektrostatischen Sprühauftrag (ESTA-Applikation) auf die zu beschichtende Metalloberfläche problemlos aufgebracht werden. Selbstverständlich sind im Bedarfsfall auch Tauchbeschichtungen, u.a. z.B. anionischer oder elektroneutraler Auftrag, vorzugweise anaphoretischer Auftrag in einem Tauchlackierbad, möglich.

Die Erfindung wird durch die nachstehenden Beispiele näher erläutert.

In den folgenden Beispielen bedeutet GTl Gewichtsteile.

Die analytischen Bestimmungen sind, sofern nichts anderes angegeben ist, auf den jeweiligen Gesamtansatz bezogen.

<u>Beispiel 1</u>

Herstellung eines OH-funktionellen linearen Polyesters als Vorprodukt

Apparatur:
4-Halskolben von 3 l Fassungsvermögen mit Rührer, Thermometer, Kolonne und Wasserabscheider.

Rohstoffe: Angabe in Gramm

| | |
|---|---|
| Adipinsäure | 818 g |
| Hexandiol | 820 g |
| Umlaufxylol ca. | 100 g |

Arbeitsweise:

Rohstoffe ohne Umlaufxylol in den Kolben bringen, evakuieren und mit Stickstoff Vakuum ausgleichen. Innerhalb von 2,5 Stunden auf 160°C anheizen und Umlaufxylol zugeben. Innerhalb von 4,5 Stunden die Temperatur auf 190°C steigern und 1,5 Stunden halten. Temperatur auf 200°C steigern und 6 Stunden halten. Bei SZ von 4,8 und 200 g Reaktionswasser das Gemisch abkühlen auf 180°C und Umlaufxylol im Vakuum abziehen. Von dem Reaktionsprodukt werden als Kennzahlen die OH-Zahl (OHZ) und die Säurezahl (SZ) in üblicher Weise ermittelt.

Kennzahlen:

| | |
|---|---|
| OHZ | 108 |
| SZ | 4,8 |

Beispiel 2

Herstellung eines OH-funktionellen linearen Polyesters als Vorprodukt

Apparatur wie in Beispiel 1

Rohstoffe:

| | |
|---|---|
| Adipinsäure | 788 g |
| Hexandiol | 850 g |
| Umlaufxylol ca. | 100 g |

Arbeitsweise:

Rohstoffe ohne Umlaufxylol in den Kolben bringen, evakuieren und mit Stickstoff Vakuum ausgleichen. Innerhalb von 2,5 Stunden auf 160°C anheizen und Umlaufxylol zugeben. Innerhalb von 4,5 Stunden die Temperatur auf 190°C steigern und 1,5 Stunden halten. Temperatur auf 200°C steigern und 6 Stunden halten. Bei SZ von 4,0 und 194 g Reaktionswasser das Gemisch abkühlen auf 180°C und Umlaufxylol im Vakuum abziehen. Die Kennzahlen werden analog dem Beispiel 1 ermittelt.

Kennzahlen:

OHZ 143

SZ 4,0

Beispiel 3

Herstellung von OH-funktionellen linearen Polyestern a), b) und c) als Vorprodukte

Die unter a), b) und c) aufgeführten Ausgangskomponenten werden in einem 3 l-Destillierkolben unter Stickstoff aufgeschmolzen und bei einer Innentemperatur von 160 - 240°C polykondensiert. Die flüchtigen Bestandteile werden mit einer Kopftemperatur von 105 - 110°C abdestilliert, bis das Reaktionsgemisch eine Säurezahl von <8 erreicht hat. Durch Anlegen von Vakuum (240°C/100 Torr) werdne letzte Reste von nicht umgesetztem Polyol entfernt und das Reaktionsprodukt auf Raumtemperatur gekühlt.

Für die in 3 analogen Versuchen als Reaktionsprodukte erhaltenen linearen Polyester a), b) und c) wurden die nachstehend aufgeführten Bestandteilsmengen (GTl) eingesetzt und von den jeweils erhaltenen Polyestern die angegebenen Säurezahlen bzw. OH-Zahlen in üblicher Weise als Kennzahlen ermittelt.

| Bestandteile (GTl) | Polyester | | |
|---|---|---|---|
| und Kennzahlen | a) | b) | c) |
| Isophthalsäure | - | 166 | 166 |
| Adipinsäure | 584 | 438 | 438 |
| Hexandiol-1,6 | 566 | 566 | 482,4 |
| Trimethylolpropan | - | - | 141,6 |
| Säurezahl | 7,8 | 6,8 | 6,1 |
| OH-Zahl | 86 | 73 | 149 |

Beispiel 4

Herstellung einer Verbindung der Formel (I)

In einem 5 l Reaktor mit Rührer, Rückflußkühler, Innenthermometer und Dosiervorrichtung werden 300 GTl eines nach Beispiel 1 hergestellten linearen Polyesters (OH-Zahl 108) und 85,5 GTl Phthalsäureanhydrid bei 120°C zu einem Produkt mit der SZ 84 umgesetzt. 258,4 GTl Bisphenol-A-diglycidylbiscarbonat (Epoxidzahl 0,1) sowie 3 GTl Triethylammoniumbromid als Katalysator und 285 GTl Methoxypropylacetat werden bei 150°C zugesetzt und unter Rühren bis zu einer SZ von 4 umgesetzt. Bei 100°C werden 32 GTl Hexamethylendiamin zugegeben und bis zu einer Restaminzahl von 2 umgesetzt. Nach Zusatz von 140 GTl Phthalsäureanhydrid wird der Ansatz 90 Minuten bei 100°C gehalten und mit Methoxypropylacetat auf einen Festkörpergehalt von 50 Gew.-% Verbindung der Formel (I) verdünnt. Es resultiert eine klare, viskose Lösung mit folgenden Kennzahlen:

| | |
|---|---|
| Viskosität | 2985 mPa•s |
| SZ (100 %ig) | 14 |
| OHZ (100 %ig) | 89 |

Durch Abdestillieren des Lösungsmittels kann der Festkörperanteil lösungsmittelfrei erhalten werden.

Beispiel 5

Herstellung einer Verbindung der Formel (I)

In einem 5 l Reaktor mit Rührer, Rückflußkühler, Innenthermometer und Dosiervorrichtung werden 300 GTl eines nach Beispiel 2 hergestellten linearen Polyesters (OH-Zahl 143) und 113 GTl Phthalsäureanhydrid bei 120°C zu einem Produkt mit der SZ 102 umgesetzt. 345 GTL Bisphenol-A-diglycidylbiscarbonat (Epoxidzahl 0,1) sowie 3 GTl Tri-

ethylammoniumbromid als Katalysator und 331 GTl Methoxypropylacetat werden bei 150°C zugesetzt und unter Rühren bis zu einer SZ von 1 umgesetzt. Bei 100°C werden 21,8 GTl Hexamethylendiamin zugegeben und bis zu einer Restaminzahl von 3,4 umgesetzt. Nach weiterem Zusatz von 46 GTl 2-Ethylhexylamin wird ebenfalls bei 100°C bis zu einer Aminzahl von 5,6 umgesetzt. Nach Zusatz von 46 GTl Phthalsäureanhydrid wird der Ansatz 90 Minuten bei 100°C gehalten und mit Methoxypropylacetat auf einen Festkörpergehalt von 50 Gew.-% Verbindung der Formel (I) verdünnt. Es resultiert eine klare, viskose Lösung mit folgenden Kennzahlen:

| | |
|---|---|
| Viskosität | 2495 mPa·s |
| SZ (100 %ig) | 12,9 |
| OHZ (100 %ig) | 97,4 |

Durch Abdestillieren des Lösungsmittels kann der Festkörperanteil lösungsmittelfrei erhalten werden.

Beispiel 6

Herstellung einer Verbindung der Formel (I)

In einem 5 l Reaktor mit Rührer, Rückflußkühler, Innenthermometer und Dosiervorrichtung werden 146 GTl Adipinsäure und 1096 GTl Bisphenol-A-diglycidylbiscarbonat (Epoxidzahl 0,1) sowie 3 GTl Triethylammoniumbromid als Katalysator und 533 GTl Methoxypropylacetat bei 150°C unter Rühren bis zu einer SZ von 1 umgesetzt. Bei 100°C werden 163,8 GTl Hexamethylendiamin und 348 GTl Methoxypropylacetat zugegeben und bis zu einer Restaminzahl von 7,4 umgesetzt. Nach weiterem Zusatz von 100 GTl 2-Ethylhexylamin wird ebenfalls bei 100°C bis zu einer Aminzahl von 7,5 umgesetzt. Nach Zusatz von 40 GTl Phthalsäureanhydrid wird der Ansatz 90 Minuten bei 100°C gehalten und mit Methoxypropylacetat auf einen Festkörpergehalt von 50 Gew.-% Verbindung der Formel (I) verdünnt. Es resultiert eine klare, viskose Lösung mit folgenden Kennzahlen:

| | |
|---|---|
| Viskosität | 5638 mPa·s |
| SZ (100 %ig) | 14,6 |

Durch Abdestillieren des Lösungsmittels kann der Festkörperanteil lösungsmittelfrei erhalten werden.

Beispiel 7

Herstellung einer Verbindung der Formel (I)

In einem 5 l Reaktor mit Rührer, Rückflußkühler, Innenthermometer und Dosiervorrichtung werden 146 GTl Adipinsäure und 900 GTl Bisphenol-A-diglycidylbiscarbonat (Epoxidzahl 3,9) sowie 3 GTl Benzyltrimethylammoniumhydroxid als Katalysator und 448 GTL Methoxypropylacetat bei 120°C unter Rühren bis zu einer SZ von 1 umgesetzt. Bei 100°C werden 103,9 GTl Hexamethylendiamin und 340 GTl Methoxypropylacetat zugegeben und bis zu einer Restaminzahl von 3,5 umgesetzt. Nach weiterem Zusatz von 60,2 GTl 2-Ethylhexylamin wird ebenfalls bei 100°C bis zu einer Aminzahl von 7,5 umgesetzt. Nach Zusatz von 31,3 GTl Phthalsäureanhydrid wird der Ansatz 90 Minuten bei 100°C gehalten und mit Methoxypropylacetat auf einen Festkörpergehalt von 50 Gew.-% Verbindung der Formel (I) verdünnt. Es resultiert eine klare, viskose Lösung mit folgenden Kennzahlen:

| | |
|---|---|
| Viskosität | 12190 mPa·s |
| SZ (100 %ig) | 11,6 |

Durch Abdestillieren des Lösungsmittels kann der Festkörperanteil lösungsmittelfrei erhalten werden.

Beispiel 8

Herstellung der wäßrigen Dispersion einer Verbindung der Formel (I)

In einem 5 l Reaktor mit Rührer, Rückflußkühler, Innenthermometer und Dosiervorrichtungen werden 500 GTl Bisphenol-A-diglycidylbiscarbonat (Epoxidzahl: 0,027) mit 171,7 GTl Trimethylhexamethylendiamin in einer Mischung aus 100 GTl N-Methylpyrrolidon (NMP) und 100 GTl Dimethyldiglykol (DGDME) bei 100°C bis zu einer Aminzahl von kleiner/gleich 7 miteinander umgesetzt.

Anschließend werden 52 GTl Trimellithsäureanhydrid und 50 GTl NMP/DGDME (1 : 1) zugegeben und die Reaktion bis zu einer Säurezahl von 26 geführt. Nach Zusatz von 48 GTl Dimethylethanolamin wird noch 2 h bei 100°C gerührt. Anschließend werden unter starkem Rühren 1350 GTl entsalztes Wasser (E-Wasser) zugesetzt.

Es resultiert eine stabile wäßrige Dispersion mit einem Feststoffgehalt an Verbindung der Formel (I) von ca. 33 Gew.-%.

Säurezahl (auf Festharz bez.): 32,2
pH-Wert: 8,9

Beispiel 9

Herstellung der wäßrigen Dispersion einer Verbindung der Formel (I)

In einem 5 l Reaktor mit Rührer, Rückflußkühler, Innenthermometer und Dosiervorrichtungen werden 400 GTl eines nach Beispiel 3b) hergestellten Polyesters (OH-Zahl 73) und 77 GTl Phthalsäureanhydrid bei 160°C zu einem Produkt mit einer Säurezahl 67 umgesetzt. 179 GTl Bisphenol-A-diglyycidylmonocarbonat (Epoxidzahl 4,65) sowie 80 GTl NMP/DGDME (1 : 1) und 4 GTl Benzyldimethylamin als Katalysator werden bei 105°C zugesetzt und unter Rühren bis zu einer Epoxidzahl von 0,17 miteinander umgesetzt. Bei 100°C werden 41 GTl Trimethylhexamethylendiamin zugegeben und bis zu einer Restaminzahl von kleiner/gleich 7 umgesetzt.

0 247 506

Nach Zusatz von 49,4 GTl Trimellithsäureanhydrid wird der Ansatz 3 h bei 105°C gehalten und anschließend mit 46,2 GTl Dimethylethanolamin versetzt. Die Dispergierung erfolgt bei Temperaturen von 100 - 50°C durch Zusatz von 1110 GTl E-Wasser unter starkem Rühren.

Es resultiert eine stabile wäßrige Dispersion mit einem Feststoffgehalt an Verbindung der Formel (I) von ca. 37 Gew.-%.

| | |
|---|---|
| Säurezahl (auf Festharz bez.): | 37,6 |
| pH-Wert: | 8,9 |

Beispiel 10

Herstellung der wäßrigen Dispersion einer Verbindung der Formel (I)

In einem 5 l Kolben mit Rührer, Rückflußkühler, Innenthermometer und Dosiervorrichtungen werden 297 GTl Polyethylenglykol ($M_n$ 4000; OH-Zahl 27,2) mit 21,9 GTl Tetrahydrophthalsäureanhydrid bei 160°C bis zu einer Säurezahl kleiner/gleich 28 umgesetzt. Anschließend werden bei 100°C 49,5 GTl Bisphenol-A-diglycidylmonocarbonat (Epoxidzahl 4,65), 60 GTl einer 1 : 1-Mischung von N-Methylpyrrolidon und Diglykoldimethylether sowie 3 GTl Benzyldimethylamin als Katalysator zugesetzt und der Ansatz bei 100°C bis zu einer Epoxidzahl kleiner/gleich 0,14 geführt. Danach werden 11 GTl Trimethylhexamethylendiamin (bei 100°C) zugegeben und bis zu einer Aminzahl kleiner/gleich 9 umgesetzt. Im Anschluß daran werden 13,4 GTl Trimellithsäure bei 100°C bis zu einer Säurezahl kleiner/gleich 17 umgesetzt. Nach Neutralisation mit 12,4 GTl Dimethylaminoethanol (ca. 1 h bei 100°C) erfolgt der Zusatz von 550 GTl E-Wasser unter starkem Rühren.

Es resultiert eine stabile wäßrige Dispersion mit einem Feststoffgehalt an Verbindung der Formel (I) von ca. 37 Gew.-%.

Säurezahl (auf Festharz bez.): 15,8
pH-Wert: 8,5

Beispiel 11

Herstellung der wäßrigen Dispersion einer Verbindung der Formel (I)

In einem 5 l Kolben mit Rührer, Rückflußkühler, Innenthermometer und Dosiervorrichtung werden 500 GTl Bisphenol-A-diglycidylether-biscarbonat (Epoxidzahl: 0,027) mit einer Lösung von 163 GTl Trimethylhexamethylendiamin in 200 GTl einer 1 : 1-Mischung aus N-Methylpyrrolidon und Diglykoldimethylether bei 100°C bis zu einer Aminzahl von kleiner/gleich 6 umgesetzt. Danach werden 52 GTl Trimellithsäureanhydrid bei 100°C bis zu einer Säurezahl von kleiner/gleich 32 umgesetzt.

Nach Neutralisation mit 48 GTl Dimethylaminoethanol (1 h bei 100°C) werden unter starkem Rühren 1200 GTl E-Wasser zugesetzt.

Es resultiert eine stabile wäßrige Dispersion mit einem Feststoffgehalt an Verbindung der Formel (I) von ca. 37 Gew.-%.

Säurezahl (auf Festharz bez.): 35
pH-Wert: 8,7

Beispiel 12

Herstellung der wäßrigen Dispersion einer Verbindung der Formel (I)

In einem 5 l Kolben mit Rührer, Rückflußkühler, Innenthermometer und Dosiervorrichtungen werden 400 GTl eines nach Beispiel 3b) hergestellten linearen Polyesters (OH-Zahl 73) mit 82,6 GTl Phthalsäureanhydrid bei 160°C bis zu einer Säurezahl von kleiner/gleich 68 umgesetzt. Anschließend werden bei 100°C 244 GTl Bisphenol-A-diglycidylmonocarbonat (Epoxidzahl 3,65), 150 GTl einer 1 : 1-Mischung aus N-Methylpyrrolidon und Diglykoldimethylether, und 4 GTl Benzyldimethylamin als Katalysator zugegeben und der Ansatz bei 100°C bis zu einer Epoxidzahl von kleiner/gleich 0,15 geführt. Danach werden 55,7 GTl 3(4)-Bis-(aminomethyl)-tricyclo $[5.2.1^{2,6}]$-decan (= TCD-Diamin) bei 100°C zugetropft und bis zu einer Aminzahl kleiner/gleich 6 umgesetzt. Im Anschluß daran werden 53,5 GTl Trimellithsäureanhydrid bei 100°C zugegeben und bis zu einer Säurezahl von kleiner/gleich 32,5 umgesetzt.

Nach Neutralisation mit 49,6 GTl Dimethylaminoethanol (1 h/100°C) erfolgt unter starkem Rühren der Zusatz von 1185 g E-Wasser.

Es resultiert eine stabile wäßrige Dispersion mit einem Feststoff gehalt an Verbindung der Formel (I) von ca. 37 Gew.-%.

Säurezahl (auf Festharz bez.): 39
pH-Wert: 7,7

<u>Beispiel 13</u>

Erfindungsgemäße Bindemitteldispersionen werden in der folgenden Hydrofüller-Rezeptur ausgetestet.

<u>Hydrofüller-Rezeptur</u>

In einem Mischgefäß mit kräftigem Rührer wird eine wäßrige Mischung aus einer erfindungsgemäßen Bindemitteldispersion

und einem vollveretherten Hexamethoxymethylmelaminharz (85 : 15, fest auf fest) hergestellt und diese mit einer Pigmentkombination aus 1 GTl $TiO_2$ (Kronos RN 59) und 1 GTl Blanc fixe (micro) sowie 0,01 GTl Ruß (LTD) abgerieben (Viskosität ca. 100 - 200 s im Ford-Auslaufbecher mit einer Auslauföffnung von 4 mm ∅).

Der pH-Wert wird mit Dimethylethanolamin auf 8,3 ± 0,2 eingestellt. Die Auslaufviskosität wird durch Zugabe von E-Wasser auf ca. 22 s gebracht.

Nach üblicher Applikation des so hergestellten wäßrigen Füllerlackes auf phosphatiertes Stahlblech (Bonder 132) und anschließendes Einbrennen werden bei den angegebenen Einbrennbedingungen die folgenden Schlagtiefungs- und Erichsentiefungswerte erzielt:

| | | |
|---|---|---|
| Einbrennbedingungen: | Ablüftzeit (RT) | 10 min |
| | Vortrocknung (80°C) | 10 min |
| | Einbrennen (160°C) | 20 min |

| Bindemitteldisp. (gemäß Beispiel) | Erichsentiefung (mm) | Schlagtiefung (in.lb) |
|---|---|---|
| Beispiel 6 | 8,6 | 120 |

Patentansprüche:

1. Urethangruppenhaltige Polymere der allgemeinen Formel (I)

$$R^1-NH-\left[-\overset{O}{\overset{\|}{C}}-O-CH_2-\underset{O-R^4}{\overset{R^5}{C}}-CH_2-O-R^3-O-CH_2-\underset{O-R^4}{\overset{R^5}{C}}-CH_2-O-\overset{O}{\overset{\|}{C}}-NH-R-NH-\right]_n-R^2 \quad (I)$$

worin R, $R^1$, $R^2$, $R^3$, $R^4$, $R^5$ und n folgende Bedeutung haben:

n = eine Zahl von 1 - 500,
$R^5$ = H und/oder $CH_3$,
R = Alkylen mit 1 - 25 C-Atomen, das linear, verzweigt, cyclisch, gesättigt, ungesättigt sein und auch Heteroatome sowie Hydroxyl-, Amino- oder Carboxylgruppen enthalten kann, oder eine bivalente Gruppe der Formeln (II), (III) oder (IV),

$$-CH_2-\underset{R^5}{CH}-O-\left[-CH_2-\underset{R^5}{CH}-O-\right]_m-CH_2-\underset{R^5}{CH}- \quad (II)$$

$$-CH_2-\underset{R^5}{CH}-O-\left[-(CH_2)_4-O-\right]_p-CH_2-\underset{R^5}{CH}- \quad (III)$$

$$-CH_2-\underset{R^5}{CH}-\left[-NH-CH_2-\underset{R^5}{CH}-\right]_k \quad (IV)$$

mit m und p = eine Zahl von 0 - 1000, k = eine Zahl von 0 - 20, oder Mischungen aus den Gruppen der Formeln (II), (III) und (IV),

$R^1$ = $H_2N-R-$, oder Alkyl mit 1 - 25 C-Atomen, das linear, verzweigt, cyclisch, gesättigt, ungesättigt sein und auch Heteroatome sowie Hydroxyl-, Amino- oder Carboxylgruppen enthalten kann, oder

Aryl mit 6 - 14 C-Atomen, das zusätzlich durch $(C_1-C_8)$-Alkylgruppen, $(C_1-C_8)$-Hydroxyalkylgruppen, Hydroxyl-, Amino- oder Carboxylgruppen substituiert sein und auch Heteroatome enthalten kann, oder Alkylaryl mit 7 - 25 C-Atomen, das zusätzlich durch Hydroxyl-, Amino- oder Carboxylgruppen substituiert sein und auch Heteroatome enthalten kann,

$R^2$ = H oder $R^1$, oder
eine Gruppe der Formel (V),

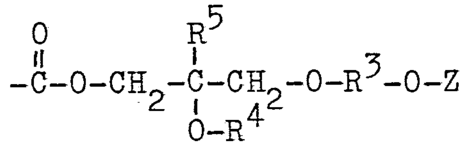 (V)

worin Z eine der Gruppierungen 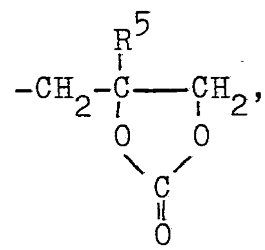,

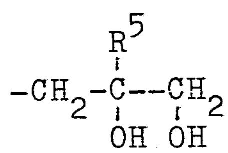 oder 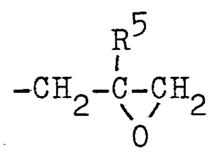 bedeuten kann, oder

$R^2$ und $R^1$ gemeinsam ein Ringschlußglied unter Cyclisierung der Verbindung der Formel (I) darstellen,

$R^3$ = a) Alkylen mit 1 - 25 C-Atomen, das linear, verzweigt, cyclisch, gesättigt oder ungesättigt sein kann, oder
eine bivalente Gruppe der Formel (VI),

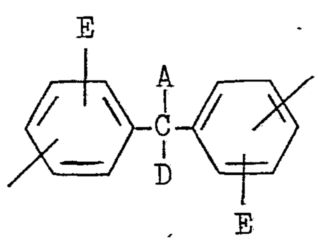 (VI)

worin A und D = H oder $(C_1-C_3)$-Alkyl und E = H oder $(C_1-C_8)$-Alkyl oder Halogen bedeuten und die Benzolringe in Formel (VI) auch teilweise oder vollständig hydriert sein können, oder einen gegebenenfalls durch niedere Alkylgruppen

und/oder Halogen substituierten bivalenten Bisphenylenrest, dessen Benzolringe auch teilweise oder vollständig hydriert sein können, oder eine bivalente Gruppe der Formel (VII),

$$-CH_2-\underset{G}{CH}-\left[-O-CH_2-\underset{G}{CH}-\right]_q- \qquad (VII)$$

worin q = eine Zahl von 1 - 200 und G = H und/oder $(C_1-C_3)$-Alkyl bedeuten, oder eine bivalente Polytetrahydrofurangruppe der Formel (VIII),

$$-CH_2-CH_2-CH_2-CH_2-O-\left[-CH_2-CH_2-CH_2-CH_2-O-\right]_r- \qquad (VIII)$$

worin r = eine Zahl von 1 - 200 bedeutet, oder

b) eine bivalente Gruppe der Formel (IX),

$$-M-O-CH_2-\underset{OH}{\overset{R^5}{C}}-CH_2-O-\overset{O}{\overset{\|}{C}}-Y-\overset{O}{\overset{\|}{C}}-O-CH_2-\underset{OH}{\overset{R^5}{C}}-CH_2-O-M- \qquad (IX)$$

worin M für [$R^3$ a)] steht und Y = eine bivalente Gruppe der Formeln (II), (III), (IV) oder einen bivalenten aliphatischen Rest mit 1 - 8 C-Atomen, der durch OH-Gruppen und/oder HOOC-Gruppen substituiert sein kann, oder einen bivalenten cycloaliphatischen Rest mit 6 - 25 C-Atomen, der durch Hydroxyl- und/oder Carboxylgruppen substituiert sein kann, oder einen bivalenten, Polyesterrest vom durchschnittlichen Molekulargewicht 500 - 100000, der aus gegebenenfalls substituierten aromatischen und/oder aliphatischen und/oder cycloaliphatischen Di-oder Tricarbonsäureeinheiten sowie aliphatischen $(C_2-C_8)$-Dioleinheiten oder

aliphatischen Dihydroxy-polyethereinheiten mit bis zu 200 linearen, verzweigten oder cyclischen ($C_2$-$C_8$)-Monomereinheiten in der Polyethergruppe aufgebaut ist, oder eine bivalente Gruppe der Formel (X),

$$--R^6-\overset{O}{\overset{\|}{C}}-O-L-O-\overset{O}{\overset{\|}{C}}-R^6-- \qquad (X)$$

in der $R^6$ einen bivalenten Rest aus der Gruppe Phenylen, Tetrahydrophenylen, Hexahydrophenylen, Carbohydroxyphenylen, Vinylen, Methylen, Ethylen, ($C_3$-$C_{10}$)-Alkylen, Naphthylen, Tetrahydronaphthylen, Dekahydronaphthylen, und L einen bivalenten Rest einer Polyestergruppe, einer Poly-($C_2$-$C_4$)alkylenglykolethergruppe, einer Poly ($C_1$-$C_8$)-alkylenoxygruppe, einer Polytetrahydrofurangruppe oder einer Polycaprolactongruppe, wobei die genannten Gruppen niedermolekular bis hochmolekular sein und Durchschnittspolymerisationsgrade von 1 bis 200 besitzen können, bedeutet, und

$R^4$ = H oder $-\overset{O}{\overset{\|}{C}}-R^7(COOR^8)_t$, wobei t = eine Zahl von 1 - 3 und $R^7$ einen bivalenten oder polyvalenten linearen oder verzweigten oder cyclischen aliphatischen Rest mit 1 - 8 C-Atomen, oder einen bivalenten oder polyvalenten aromatischen oder aromatischaliphatischen Rest mit 6 - 14 C-Atomen, oder wenn t = null die Gruppe $-COOR^8$, und $R^8$ Wasserstoff oder den kationischen Rest einer organischen oder anorganischen basischen Verbindung bedeutet, mit der Maßgabe, daß $R^4$ zu wenigstens 5 mol-%, bezogen auf $R^4$, für H steht.

2. Verbindungen nach Anspruch 1, dadurch gekennzeichnet, daß in Formel (I)

R = Alkylen mit 1 - 25 C-Atomen, das linear, verzweigt, cyclisch, gesättigt sein und als Heteroatome Sauerstoff und/oder Stickstoff enthalten kann, oder eine bivalente Gruppe der Formel (IV),

$R^3$ = eine bivalente Gruppe der Formeln (VI) oder (IX), und

$R^4$ = H oder $-\overset{\overset{O}{\|}}{C}-R^7(COOR^8)_t$, wobei $R^7$ für einen aromatischen Rest mit 6 - 10 C-Atomen steht, bedeutet.

3. Verbindungen nach einem der Ansprüche 1 und/oder 2, dadurch gekennzeichnet, daß in Formel (I)

R = lineares und/oder verzweigtes Alkylen mit 3 - 15 C-Atomen, oder eine bivalente Gruppe der Formel (IV) mit k = 1 - 5,

$R^3$ = eine bivalente Gruppe der Formel (VI) mit A und D = H oder Methyl und E = H, oder, eine bivalente Gruppe der Formel (IX) mit Y = eine bivalente Gruppe der Formel (X) worin $R^6$ für Phenylen, Tetrahydrophenylen, Hexahydrophenylen, Vinylen, Ethylen, und L für einen bivalenten Rest einer Polyestergruppe stehen, und

$R^4$ = H oder $-\overset{\overset{O}{\|}}{C}-R^7(COOR^8)_t$, wobei $R^7$ für einen aromatischen Rest mit 6 - 10 C-Atomen steht, bedeutet.

4. Verbindungen nach mindestens einem der Ansprüche 1 bis 3, dadurch gekennzeichnet, daß in Formel (I) $R^4$ bis zu 80 mol-%, bezogen auf $R^4$, für die Gruppe $-\overset{\overset{O}{\|}}{C}-R^7(COOR^8)_t$ und $R^8$ für einen kationischen Rest einer organischen basischen Verbindung stehen, und die Verbindungen der Formel (I) in wäßrigen Dispersionen mit bis zu 75 Gew.-% Feststoffgehalt, bezogen auf die Dispersion, vorliegen.

5. Lösungen oder wäßrige Dispersionen enthaltend die urethangruppenhaltigen Polymeren der Formel I nach mindestens einem der Ansprüche 1 bis 4.

6. Harzmischungen in fester, gelöster oder wäßrig-dispergierter Form, dadurch gekennzeichnet, daß sie urethangruppenhaltige Polymere der Formel (I) nach mindestens einem der Ansprüche 1 bis 4 enthalten.

7. Verfahren zur Herstellung von Verbindungen der Formel (I), deren Lösungen bzw. deren wäßrigen Dispersionen nach mindestens einem der Ansprüche 1 bis 6, dadurch gekennzeichnet, daß man

A) Polyaminoverbindungen der allgemeinen Formel (Ia),

$$H_2N-R-NH_2 \qquad (Ia)$$

worin R die Bedeutung wie in Formel (I) hat, gegebenenfalls in Mischung mit Monoaminen der Formeln (IIa) und/oder (IIIa),

$$R^1-NH_2 \qquad (IIa)$$

$$R^2-NH_2 \qquad (IIIa)$$

worin $R^1$ und $R^2$ die Bedeutung wie in Formel (I) mit Ausnahme von $H_2N-R-$ und H haben, mit

B) Polycarbonaten der allgemeinen Formel (IVa),

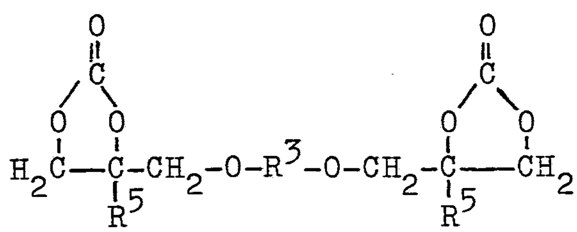
(IVa)

worin $R^3$ und $R^5$ die Bedeutungen wie in Formel (I) haben, umsetzt, wobei die Umsetzung gegebenenfalls bei höheren Temperaturen und/oder gegebenenfalls unter Zusatz von inerten organischen Lösungsmitteln durchgeführt wird, und gegebenenfalls

C) das Umsetzungsprodukt weiter mit Polycarbonsäuren der allgemeinen Formel (Va),

$$H-R4 \qquad (Va)$$

worin $R^4$ die Bedeutung wie in Formel (I) mit Ausnahme von H hat, oder mit deren Anhydriden, gegebenenfalls bei höheren Temperaturen, zu einem Produkt mit einer Säurezahl zwischen 0 und 100 umsetzt, das Umsetzungsprodukt gegebenenfalls isoliert oder gegebenenfalls in einem Lösungsmittel löst und/oder gegebenenfalls

D) das Umsetzungsprodukt durch Zusatz einer basischen Verbindung teilweise oder vollständig neutralisiert und es, gegebenenfalls einschließlich des Lösungsmittels, gegebenenfalls

E) mit einer solchen Menge Wasser intensiv vermischt, daß eine wäßrige Dispersion erhalten wird, die einen Feststoffgehalt von bis zu 75 Gew.-%, bezogen auf die Dispersion, besitzt.

8. Verfahren nach Anspruch 7, dadurch gekennzeichnet, daß das in der Stufe C) erhaltene Umsetzungsprodukt eine Säurezahl von 5 - 60 aufweist und man dieses Umsetzungsprodukt dann in der Stufe D) durch Zusatz einer organischen basischen Verbindung teilweise oder vollständig neutralisiert und in der Stufe E) mit einer solchen Menge Wasser bei Temperaturen zwischen 25 und 100°C intensiv vermischt, daß eine stabile wäßrige Dispersion mit 5 - 65 Gew.-% Feststoffgehalt, bezogen auf die Dispersion, erhalten wird.

9. Verfahren nach einem der Ansprüche 7 und/oder 8, dadurch gekennzeichnet, daß man als inerte organische Lösungsmittel N-Methylpyrrolidon und/oder Diglykoldimethylether in einer Menge bis zu 100 Gew.-%, bezogen auf das Reaktantengemisch, zusetzt.

10. Verwendung der Verbindungen der Formel (I) nach mindestens einem der Ansprüche 1 bis 6 oder erhalten nach mindestens einem der Ansprüche 7 bis 9 in fester Form, in Lösung oder wäßriger Dispersion, alleine oder in Abmischung mit weiteren reaktiven Komponenten aus der

Gruppe blockierte oder nicht blockierte Isocyanate bzw. Polyisocyanate, Melamin-, Alkyd- und Epoxiharze in Klebstoff- und Lackformulierungen.

11. Verwendung von Verbindungen der Formel (I) nach mindestens einem der Ansprüche 1 bis 6 oder erhalten nach mindestens einem der Ansprüche 7 bis 9 als Bindemittelkomponente in wäßrigen, anaphoretisch abscheidbaren Lackformulierungen.

Patentansprüche Österreich und Spanien:

1. Verfahren zur Herstellung von Verbindungen der Formel (I), deren Lösungen oder deren wäßrigen Dispersionen

$$R^1-NH-\left[\overset{O}{\overset{\|}{C}}-O-CH_2-\underset{O-R^4}{\overset{R^5}{C}}-CH_2-O-R^3-O-CH_2-\underset{O-R^4}{\overset{R^5}{C}}-CH_2-O-\overset{O}{\overset{\|}{C}}-NH-R-NH\right]_n-R^2 \quad (I)$$

worin R, $R^1$, $R^2$, $R^3$, $R^4$, $R^5$ und n folgende Bedeutung haben:

n = eine Zahl von 1 - 500,

$R^5$ = H und/oder $CH_3$,

R = Alkylen mit 1 - 25 C-Atomen, das linear, verzweigt, cyclisch, gesättigt, ungesättigt sein und auch Heteroatome sowie Hydroxyl-, Amino- oder Carboxylgruppen enthalten kann, oder eine bivalente Gruppe der Formeln (II), (III) oder (IV),

$$-CH_2-\underset{R^5}{CH}-O-\left[CH_2-\underset{R^5}{CH}-O\right]_m-CH_2-\underset{R^5}{CH}- \quad (II)$$

$$-CH_2-\underset{R^5}{CH}-O-\left[(CH_2)_4-O\right]_p-CH_2-\underset{R^5}{CH}- \quad (III)$$

$$-CH_2-\underset{R^5}{CH}-\left[NH-CH_2-\underset{R^5}{CH}\right]_k- \quad (IV)$$

mit m und p = eine Zahl von 0 - 1000, k = eine Zahl von 0 - 20, oder Mischungen aus den Gruppen der Formeln (II), (III) und (IV),

$R^1$ = $H_2N-R-$, oder Alkyl mit 1 - 25 C-Atomen, das linear, verzweigt, cyclisch, gesättigt, ungesättigt sein und auch Heteroatome sowie Hydroxyl-, Amino- oder Carboxylgruppen enthalten kann, oder

Aryl mit 6 - 14 C-Atomen, das zusätzlich durch $(C_1-C_8)$-Alkylgruppen, $(C_1-C_8)$-Hydroxyalkylgruppen, Hydroxyl-, Amino- oder Carboxylgruppen substituiert sein und auch Heteroatome enthalten kann, oder Alkylaryl mit 7 - 25 C-Atomen, das zusätzlich durch Hydroxyl-, Amino- oder Carboxylgruppen substituiert sein und auch Heteroatome enthalten kann,

$R^2$ = H oder $R^1$, oder eine Gruppe der Formel (V),

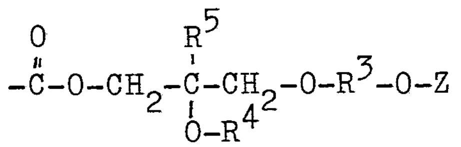 (V)

worin Z eine der Gruppierungen 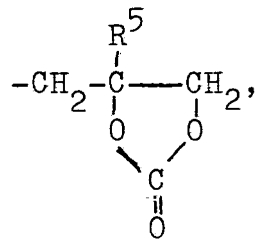,

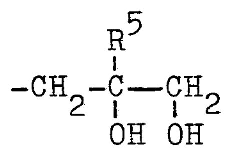 oder 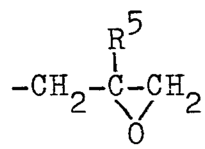 bedeuten kann, oder

$R^2$ und $R^1$ gemeinsam ein Ringschlußglied unter Cyclisierung der Verbindung der Formel (I) darstellen,

$R^3$ = a) Alkylen mit 1 - 25 C-Atomen, das linear, verzweigt, cyclisch, gesättigt oder ungesättigt sein kann, oder eine bivalente Gruppe der Formel (VI),

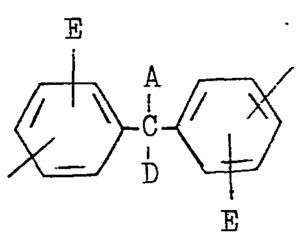 (VI)

worin A und D = H oder $(C_1-C_3)$-Alkyl und E = H oder $(C_1-C_8)$-Alkyl oder Halogen bedeuten und die Benzolringe in Formel (VI) auch teilweise oder vollständig hydriert sein können, oder einen gegebenenfalls durch niedere Alkylgruppen

und/oder Halogen substituierten bivalenten Bisphenylenrest, dessen Benzolringe auch teilweise oder vollständig hydriert sein können, oder eine bivalente Gruppe der Formel (VII),

$$-CH_2-\underset{G}{CH}-\left[O-CH_2-\underset{G}{CH}\right]_q- \qquad (VII)$$

worin q = eine Zahl von 1 - 200 und G = H und/oder $(C_1-C_3)$-Alkyl bedeuten, oder eine bivalente Polytetrahydrofurangruppe der Formel (VIII),

$$-CH_2-CH_2-CH_2-CH_2-O-\left[CH_2-CH_2-CH_2-CH_2-O\right]_r- \qquad (VIII)$$

worin r = eine Zahl von 1 - 200 bedeutet, oder

b) eine bivalente Gruppe der Formel (IX),

$$-M-O-CH_2-\underset{OH}{\overset{R^5}{C}}-CH_2-O-\overset{O}{\overset{\|}{C}}-Y-\overset{O}{\overset{\|}{C}}-O-CH_2-\underset{OH}{\overset{R^5}{C}}-CH_2-O-M- \qquad (IX)$$

worin M für $[R^3$ a)] steht und Y = eine bivalente Gruppe der Formeln (II), (III), (IV) oder einen bivalenten aliphatischen Rest mit 1 - 8 C-Atomen, der durch OH-Gruppen und/oder HOOC-Gruppen substituiert sein kann, oder einen bivalenten cycloaliphatischen Rest mit 6 - 25 C-Atomen, der durch Hydroxyl- und/oder Carboxylgruppen substituiert sein kann, oder einen bivalenten, Polyesterrest vom durchschnittlichen Molekulargewicht 500 - 100000, der aus gegebenenfalls substituierten aromatischen und/oder aliphatischen und/oder cycloaliphatischen Di-oder Tricarbonsäureeinheiten sowie aliphatischen $(C_2-C_8)$-Dioleinheiten oder

aliphatischen Dihydroxy-polyethereinheiten mit bis zu 200 linearen, verzweigten oder cyclischen $(C_2-C_8)$-Monomereinheiten in der Polyethergruppe aufgebaut ist, oder eine bivalente Gruppe der Formel (X),

$$--R^6-\overset{O}{\overset{\|}{C}}-O-L-O-\overset{O}{\overset{\|}{C}}-R^6-- \qquad (X)$$

in der $R^6$ einen bivalenten Rest aus der Gruppe Phenylen, Tetrahydrophenylen, Hexahydrophenylen, Carbohydroxyphenylen, Vinylen, Methylen, Ethylen, $(C_3-C_{10})$-Alkylen, Naphthylen, Tetrahydronaphthylen, Dekahydronaphthylen, und L einen bivalenten Rest einer Polyestergruppe, einer Poly-$(C_2-C_4)$alkylenglykolethergruppe, einer Poly $(C_1-C_8)$-alkylenoxygruppe, einer Polytetrahydrofurangruppe oder einer Polycaprolactongruppe, wobei die genannten Gruppen niedermolekular bis hochmolekular sein und Durchschnittspolymerisationsgrade von 1 bis 200 besitzen können, bedeutet, und

$R^4$ = H oder $-\overset{O}{\overset{\|}{C}}-R^7(COOR^8)_t$, wobei t = eine Zahl von 1 - 3 und $R^7$ einen bivalenten oder polyvalenten linearen oder verzweigten oder cyclischen aliphatischen Rest mit 1 - 8 C-Atomen, oder einen bivalenten oder polyvalenten aromatischen oder aromatischaliphatischen Rest mit 6 - 14 C-Atomen, oder wenn t = null die Gruppe $-COOR^8$, und $R^8$ Wasserstoff oder den kationischen Rest einer organischen oder anorganischen basischen Verbindung bedeutet, mit der Maßgabe, daß $R^4$ zu wenigstens 5 mol-%, bezogen auf $R^4$, für H steht,

dadurch gekennzeichnet, daß man

A) Polyaminoverbindungen der allgemeinen Formel (Ia),

$$H_2N-R-NH_2 \qquad (Ia)$$

worin R die Bedeutung wie in Formel (I) hat, gegebenenfalls in Mischung mit Monoaminen der Formeln (IIa) und/oder (IIIa),

$$R^1-NH_2 \qquad (IIa)$$

$$R^2-NH_2 \qquad (IIIa)$$

worin $R^1$ und $R^2$ die Bedeutung wie in Formel (I) mit Ausnahme von $H_2N-R-$ und H haben, mit

B) Polycarbonaten der allgemeinen Formel (IVa),

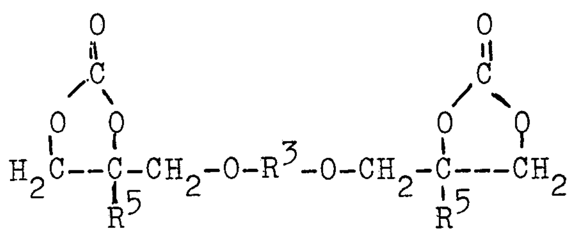

(IVa)

worin $R^3$ und $R^5$ die Bedeutungen wie in Formel (I) haben, umsetzt, wobei die Umsetzung gegebenenfalls bei höheren Temperaturen und/oder gegebenenfalls unter Zusatz von inerten organischen Lösungsmitteln durchgeführt wird, und gegebenenfalls

C) das Umsetzungsprodukt weiter mit Polycarbonsäuren der allgemeinen Formel (Va),

$$H-R^4 \qquad (Va)$$

worin $R^4$ die Bedeutung wie in Formel (I) mit Ausnahme von H hat, oder mit deren Anhydriden, gegebenenfalls bei höheren Temperaturen, zu einem Produkt mit einer Säurezahl zwischen 0 und 100 umsetzt, das Umsetzungsprodukt gegebenenfalls isoliert oder gegebenenfalls in einem Lösungsmittel löst und gegebenenfalls

D) das Umsetzungsprodukt durch Zusatz einer basischen Verbindung teilweise oder vollständig neutralisiert und es, gegebenenfalls einschließlich des Lösungsmittels, gegebenenfalls

E) mit einer solchen Menge Wasser intensiv vermischt, daß eine wäßrige Dispersion erhalten wird, die einen Feststoffgehalt von bis zu 75 Gew.-%, bezogen auf die Dispersion, besitzt.

2. Verfahren nach Anspruch 1, dadurch gekennzeichnet, daß das in der Stufe C) erhaltene Umsetzungsprodukt eine Säurezahl von 5 - 60 aufweist und man dieses Umsetzungsprodukt dann in der Stufe D) durch Zusatz einer organischen basischen Verbindung teilweise oder vollständig neutralisiert und in der Stufe E) mit einer solchen Menge Wasser bei Temperaturen zwischen 25 und 100°C intensiv vermischt, daß eine stabile wäßrige Dispersion mit 5 - 65 Gew.-% Feststoffgehalt, bezogen auf die Dispersion, erhalten wird.

3. Verfahren nach Anspruch 1 und/oder 2, dadurch gekennzeichnet, daß man als inerte organische Lösungsmittel N-Methylpyrrolidon und/oder Diglykoldimethylether in einer Menge bis zu 100 Gew.-%, bezogen auf das Reaktantengemisch, zusetzt.

4. Verfahren nach mindestens einem der Ansprüche 1 bis 3, dadurch gekennzeichnet, daß in Formel (I)

R = Alkylen mit 1 - 25 C-Atomen, das linear, verzweigt, cyclisch, gesättigt sein und als Heteroatome Sauerstoff und/oder Stickstoff enthalten kann, oder
eine bivalente Gruppe der Formel (IV),

$R^3$ = eine bivalente Gruppe der Formeln (VI) oder (IX), und

$R^4$ = H oder $-\overset{O}{\overset{\|}{C}}-R^7(COOR^8)_t$, wobei $R^7$ für einen aromatischen Rest mit 6 - 10 C-Atomen steht, bedeutet.

5. Verfahren nach mindestens einem der Ansprüche 1 bis 4, dadurch gekennzeichnet, daß in Formel (I)
R = lineares und/oder verzweigtes Alkylen mit 3 - 15 C-Atomen, oder eine bivalente Gruppe der Formel (IV) mit k = 1 - 5,
$R^3$ = eine bivalente Gruppe der Formel (VI) mit A und D = H oder Methyl und E = H, oder, eine bivalente Gruppe der Formel (IX) mit Y = eine bivalente Gruppe der Formel (X) worin $R^6$ für Phenylen, Tetrahydrophenylen, Hexahydrophenylen, Vinylen, Ethylen, und L für einen bivalenten Rest einer Polyestergruppe stehen, und
$R^4$ = H oder $-\overset{O}{\overset{\|}{C}}-R^7(COOR^8)_t$, wobei $R^7$ für einen aromatischen Rest mit 6 - 10 C-Atomen steht, bedeutet.

6. Verfahren nach mindestens einem der Ansprüche 1 bis 5, dadurch gekennzeichnet, daß in Formel (I) $R^4$ bis zu 80 mol-%, bezogen auf $R^4$, für die Gruppe $-\overset{O}{\overset{\|}{C}}-R^7(COOR^8)_t$ und $R^8$ für einen kationischen Rest einer organischen basischen Verbindung stehen, und die Verbindungen der Formel (I) in wäßrigen Dispersionen mit bis zu 75 Gew.-% Feststoffgehalt, bezogen auf die Dispersion, vorliegen.

7. Harzmischungen in fester, gelöster oder wäßrig-dispergierter Form, dadurch gekennzeichnet, daß sie urethangruppenhaltige Polymere der Formel (I) erhalten, nach mindestens einem der Ansprüche 1 bis 6, enthalten.

8. Verwendung der Verbindungen der Formel (I) erhalten, nach mindestens einem Ansprüche 1 bis 6, in fester Form, in Lösung oder wäßriger Dispersion, alleine oder in Abmischung mit weiteren reaktiven Komponenten aus der Gruppe blockierte oder nicht blockierte Isocyanate bzw. Polyisocyanate, Melamin-, Alkyd- und Epoxiharze in Klebstoff- und Lackformulierungen.

9. Verwendung von Verbindungen der Formel (I), erhalten nach mindestens einem der Ansprüche 1 bis 6, als Bindemittelkomponente in wäßrigen, anaphoretisch abscheidbaren Lackformulierungen.